# EUROPEAN PATENT APPLICATION

(11) **EP 4 270 866 A1**
(43) Date of publication of application: **01.11.2023**
(21) Application number: 21909384.6
(22) Date of filing: 21.12.2021
(51) Int. Cl.: H04L 9/32

(54) **IDENTITY AUTHENTICATION METHOD AND APPARATUS, DEVICE, CHIP, STORAGE MEDIUM, AND PROGRAM**

(30) Priority: 26.12.2020 CN 202011569203
(71) Applicant: China Iwncomm Co., Ltd., Xi'an, Shaanxi 710075 (CN)
(72) Inventor: TIE, Manxia, Shaanxi 710075 (CN); CAO, Jun, Shaanxi 710075 (CN); LAI, Xiaolong, Shaanxi 710075 (CN); ZHAO, Xiaorong, Shaanxi 710075 (CN); LI, Qin, Shaanxi 710075 (CN); ZHANG, Bianling, Shaanxi 710075 (CN); HUANG, Zhenhai, Shaanxi 710075 (CN); DU, Zhiqiang, Shaanxi 710075 (CN)
(74) Representative: Regimbeau
(86) International application number: PCT/CN2021/140064
(87) International publication number: WO 2022/135388

(57) **Abstract**

Disclosed by an embodiment of the present application are an identity authentication method and apparatus, a device, a chip, a storage medium, and a program. The method comprises: an authentication access controller (AAC) sends an authentication result message comprising identity authentication result information ciphertext to a requesting device (REQ), wherein the identity authentication result information ciphertext is generated by using a message encryption key to encrypt encryption data comprised within identity authentication result information Pub_{AAC} and a digital signature Sig_{AS_REQ} of a second authentication server trusted by the REQ. The REQ decrypts the identity authentication result information ciphertext to obtain Pub_{AAC} and Sig_{AS_REQ}, verifies Sig_{AS_REQ} by using a public key of the second authentication server, and once verification is successful, determines an identity authentication result of the AAC according to a verification result in Pub_{AAC}.

## Description

### CROSS-REFERENCE TO RELATED APPLICATION

This application claims priority to Chinese Patent Application No. 202011569203.4, filed on December 26, 2020 and entitled "IDENTITY AUTHENTICATION METHOD AND APPARATUS, DEVICE, CHIP, STORAGE MEDIUM AND PROGRAM", the disclosure of which is hereby incorporated by reference in its entirety.

### TECHNICAL FIELD

The present disclosure relates to the technical field of network communication security, and in particular, to a method for identity authentication and apparatus, a device, a chip, a storage medium and a program.

### BACKGROUND

In a communication network, a requester (REQ) may access a network through an authentication access controller (AAC). In some cases requiring high security, the REQ needs to perform identity authentication for the AAC, to ensure that the network that the REQ accesses is a valid network. In addition, for node-to-node transmission in a blockchain technology, a trust relationship also needs to be established between different nodes, such that it is also very important to authenticate identities of the nodes.

During a process of identity authentication for the AAC, the AAC needs to provide identity information of itself for identity authentication. However, such identity information usually carries private and sensitive information, such as geographical location information, and affiliated institution information. In addition, in a practical application process, such identity information is generally contained in an entity digital certificate, and the digital certificate is used as an entity identity credential.

If the identity information of the AAC is intercepted by an attacker for an illegal purpose in the process of identity authentication for the AAC, a great security risk is caused for the AAC, the REQ and even the network.

### SUMMARY

The disclosure provides a method for identity authentication, apparatus, a device, a chip, a storage medium and a program. According to the present disclosure, information including identity authentication result information of an AAC is encrypted with a message encryption key, so as to prevent exposure of private and sensitive information carried in a process of the AAC sending an authentication result message to an REQ, and to prevent an attacker from attacking the valid AAC. In addition, illegal activities by using the private and sensitive information of the AAC can be avoid, and security of the AAC, the REQ and even the network can be ensured.

In a first aspect, embodiments of the present disclosure provide a method for identity authentication, the method includes the following operations.

The AAC sends a first authentication request message to a first authentication server trusted by the AAC. The first authentication request message includes a digital certificate of the AAC.

The AAC acquires a first authentication response message from the first authentication server. The first authentication response message includes identity authentication result information Pub_{AAC} and a digital signature of a second authentication server trusted by an REQ, and the Pub_{AAC} includes a verification result for the digital certificate of the AAC.

The REQ acquires an authentication result message from the AAC. The authentication result message includes an encrypted identity authentication result information, and the encrypted identity authentication result information is obtained by encrypting to-be-encrypted data including the Pub_{AAC} and the digital signature of the second authentication server trusted by the REQ with a message encryption key by the AAC.

The REQ decrypts the encrypted identity authentication result information with the message encryption key, to obtain the Pub_{AAC} and the digital signature of the second authentication server.

The REQ verifies the digital signature of the second authentication server with a public key of the second authentication server. In response to the verification being successful, the REQ determines an identity authentication result of the AAC according to the verification result in the Pub_{AAC}

In a second aspect, embodiments of the present disclosure provide an REQ including a first acquiring portion, a decrypting portion, a first verifying portion and a first determining portion.

The first acquiring portion is configured to acquire an authentication result message from an AAC. The authentication result message includes an encrypted identity authentication result information, and the encrypted identity authentication result information is obtained by encrypting to-be-encrypted data including the identity authentication result information Pub_{AAC} and a digital signature of a second authentication server trusted by the REQ with a message encryption key by the AAC.

The Pub_{AAC} and the digital signature of the second authentication server is acquired by the AAC from a first authentication response message sent by a first authentication server trusted by the AAC, and the Pub_{AAC} includes a verification result for a digital certificate of the AAC.

The decrypting portion is configured to decrypt the encrypted identity authentication result information with the message encryption key to obtain the Pub_{AAC} and the digital signature of the second authentication server.

The first verifying portion is configured to verify the digital signature of the second authentication server with a public key of the second authentication server.

The first determining portion is configured to, in response to the verification being successful, determine an identity authentication result of the AAC according to the verification result in the Pub_{AAC}.

In a third aspect, embodiments of the present disclosure provide an AAC including a first sending portion and a first acquiring portion.

The first sending portion is configured to send a first authentication request message to a first authentication server trusted by the AAC. The first authentication request message includes a digital certificate of the AAC.

The first acquiring portion is configured to acquire a first authentication response message from the first authentication server. The first authentication response message includes identity authentication result information Pub_{AAC} and a digital signature of a second authentication server trusted by an REQ, and the Pub_{AAC} includes a verification result for the digital certificate of the AAC.

The first sending portion is further configured to send an authentication result message to the REQ. The authentication result message includes an encrypted identity authentication result information, and the encrypted identity authentication result information is obtained by encrypting to-be-encrypted data including the Pub_{AAC} and the digital signature of the second authentication server with a message encryption key by the AAC.

In a fourth aspect, embodiments of the present disclosure provide an REQ including a processor and a memory configured to store computer programs. The processor is configured to call and run the computer programs stored in the memory, to perform the operations performed by the REQ in the method for identity authentication in the first aspect.

In a fifth aspect, embodiments of the present disclosure provide an AAC including a processor and a memory configured to store computer programs. The processor is configured to call and run the computer programs stored in the memory, to perform the operations performed by the AAC in the method for identity authentication in the first aspect.

In a sixth aspect, embodiments of the present disclosure provide a chip including a processor. The processor is configured to call and run computer programs from a memory, to cause an REQ mounted with the chip to perform the operations performed by the REQ in the method for identity authentication in the first aspect, or to cause an AAC mounted with the chip to perform operations performed by the AAC in the method for identity authentication in the first aspect.

In a seventh aspect, embodiments of the present disclosure provide a computer storage medium configured to store computer programs. The computer programs cause an REQ to perform the operations performed by the REQ in the method for identity authentication in the first aspect, or cause an AAC to perform the operations performed by the AAC in the method for identity authentication in the first aspect.

In an eighth aspect, embodiments of the present disclosure provide a computer program that causing an REQ to perform the operations performed by the REQ in the method for identity authentication in the first aspect, or causing an AAC to perform the operations performed by the AAC in the method for identity authentication in the first aspect.

According to the above technical solution, information including identity authentication result information of the AAC is encrypted with a message encryption key, so as to prevent exposure of the carried private and sensitive information carried in a process of the AAC sending an authentication result message to an REQ. Therefore, an attacker has no knowledge of whether the AAC is valid. In this way, it is possible to prevent the attacker from mainly attacking the valid AAC, illegal activities by using the private and sensitive information of the AAC can be avoid, security of the AAC, the REQ and even the network can be ensured. Furthermore, an authentication server is involved to achieve a unilateral identity authentication for the AAC by the REQ in real-time while ensuring confidentiality of information related to an entity identity, which lays a foundation for ensuring that the user communicates with a valid network.

In order to achieve the above purposes, features and advantages of the present disclosure more apparent and easy for understanding, detailed descriptions of preferred embodiments are made below with reference to the drawings.

### BRIEF DESCRIPTION OF THE DRAWINGS

In order to more clearly illustrate the embodiments of the present application or the technical solutions in the related art, the drawings needed in the description of the embodiments or the related art will be briefly described below. It is apparent that the drawings in the following descriptions are merely some embodiments of the present application. Other drawings can be obtained by those skilled in the art according to these drawings without paying inventive efforts.
FIG. 1 is a schematic diagram of a method for identity authentication according to an embodiment of the present disclosure.
FIG. 2 is a schematic diagram of a method for negotiating a message encryption key between an REQ and an AAC according to an embodiment of the present disclosure.
FIG. 3 is a schematic diagram of a method for identity authentication in a non-roaming case according to an embodiment of the present disclosure.
FIG. 4 is a schematic diagram of a method for identity authentication in a roaming case according to an embodiment of the present disclosure.
FIG. 5 is a schematic diagram of another method for identity authentication in a non-roaming case according to an embodiment of the present disclosure, where "*" indicates an optional field or an optional operation.
FIG. 6 is a schematic diagram of another method for identity authentication in a roaming case according to an embodiment of the present disclosure, where "*" indicates an optional field or an optional operation.
FIG. 7 is a block diagram of a structure of an REQ according to an embodiment of the present disclosure.
FIG. 8 is a block diagram of a structure of an AAC according to an embodiment of the present disclosure.
FIG. 9 is a schematic structural diagram of an electronic device according to an embodiment of the present disclosure.
FIG. 10 is a schematic structural diagram of a chip according to an embodiment of the present disclosure.

### DETAILED DESCRIPTION

The technical solution in the embodiments of the present application will be described below with reference to the drawings in the embodiments of the present application. It is apparent that the described embodiments are only part of the embodiments of the present application, not all the embodiments. All other embodiments obtained by those of ordinary skill in the art on the basis of the embodiments in the present application without paying inventive efforts all fall within the scope of protection of the present application.

The technical solutions described in the embodiments of the present application may be arbitrarily combined without conflicts.

In a communication network, an REQ may access a network through an AAC. In order to ensure that the network accessed by the REQ is a valid network, the REQ needs to authenticate an identity of the AAC.

Taking a present wireless communication and mobile communication scenario as an example, in the scenario that the REQ accesses a wireless network through the AAC, the REQ may be a terminal device such as a mobile phone, a personal digital assistant (PDA) or a tablet computer, and the AAC may be a network-side device such as a wireless access point or a wireless router. In the scenario that the REQ accesses a wired network through the AAC, the REQ may be a terminal device such as a desktop computer or a notebook computer, and the AAC may be a network-side device such as a switch or a router. In the scenario that the REQ accesses a 4th/5th generation mobile communication technology (4G/5G) network through the AAC, the REQ may be a terminal device such as the mobile phone or the tablet computer, and the AAC may be a network-side device such as a base station. Of course, the present application may also be applied for various data communication scenarios such as other wired networks or short-range communication networks.

However, in a process of performing identity authentication for the AAC, the AAC needs to provide identity information of itself for identity authentication. The identity information is generally contained in the digital certificate of the AAC and carries private and sensitive information such as geographic location information, affiliated organization information, etc. If the identity information of the AAC is intercepted by an attacker for an illegal purpose in the process of identity authentication for the AAC, a great security risk is caused for the AAC, the REQ and even the network.

In order to solve the above technical problem, the embodiments of the disclosure provide a method for identity authentication. The method includes the following operations. An AAC sends a first authentication request message to a first authentication server trusted by the AAC. The AAC acquires a first authentication response message from the first authentication server, where the first authentication response message includes identity authentication result information Pub_{AAC} of the AAC and a digital signature of a second authentication server trusted by a REQ. Then, the AAC encrypts to-be-encrypted data including the Pub_{AAC} and the digital signature of the second authentication server with a message encryption key, to obtain encrypted identity authentication result information, and the AAC sends an authentication result message including the encrypted identity authentication result information to the REQ. The Pub_{AAC} carries private and sensitive information indicating whether the AAC is valid or not. The REQ decrypts the encrypted identity authentication result information with the message encryption key, to obtain the Pub_{AAC} and the digital signature of the second authentication server, and verifies the digital signature of the second authentication server with a public key of the second authentication server. In response to the verification being successful, the REQ determines an identity authentication result of the AAC according to a verification result in the Pub_{AAC}.

It can be understood that the verification result mentioned in this embodiment of the present disclosure is obtained by performing validity verification for the digital certificate of the AAC by an authentication server trusted by the AAC. The above devices are only examples of the REQ, the AAC and the authentication server, and shall not be understood as limitations to the REQ, the AAC and the authentication server. In other possible implementations of the embodiments of the present disclosure, the REQ, the AAC and the authentication server may be other devices.

The method for identity authentication provided by the embodiments of the disclosure is used for implementing AAC authentication with an unauthenticated REQ (AAUR).

For convenience of description, in the embodiments of the present application, the method for identity authentication in the present application is described by taking the REQ, the AAC and the authentication server (AS) as an example.

The AS is a trusted third-party entity, holding a digital certificate complying with a regulation of ISO/IEC 9594-8/ITU X.509, other standards or other technical systems, and a private key corresponding to the digital certificate. An AS trusted by AAC is called a first authentication server AS-AAC. An AS trusted by the REQ is called a second authentication server AS-REQ. When the AS-AAC is different from the AS-REQ, the AS-AAC and the AS-REQ trust each other and know a digital certificate or a public key in the digital certificate of each other.

The REQ may be an endpoint participating in the identity authentication process, establishing a connection with the AAC, accessing services provided by the AAC, and accessing an AS through the AAC, and the REQ knows the digital certificate of the AS-REQ trusted by the REQ or the public key in the digital certificate. The AAC may be another endpoint participating in the identity authentication process, establishing a connection with the REQ, provides services, communicating with the REQ, and directly accessing the AS-AAC. The AAC holds a digital certificate complying with a regulation of ISO/IEC 9594-8/ITU X.509, other standards or other technical systems, and a private key corresponding to the digital certificate. The validity of the digital certificate of the AAC may be verified by the AS-AAC.

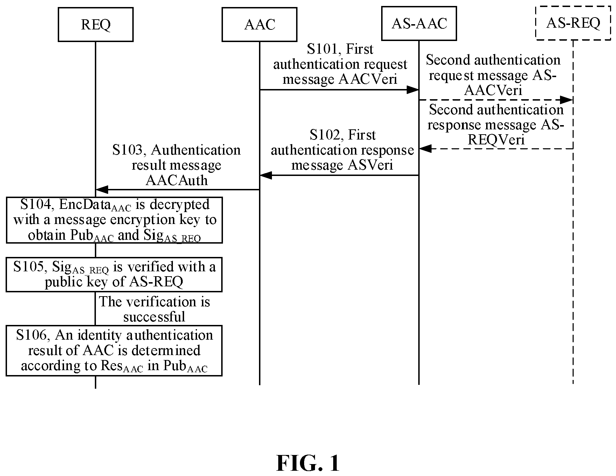

With reference to FIG. 1, a method for identity authentication according to an embodiment of the present disclosure is described below, and the method includes operations S101 to S106.

In operation S101, an AAC sends a first authentication request message AACVeri to an AS-AAC trusted by the AAC.

The AACVeri includes a digital certificate Certaac of AAC.

In operation S102, the AAC acquires a first authentication response message ASVeri from the AS-AAC trusted by the AAC.

The ASVeri includes identity authentication result information Pub_{AAC} and a digital signature Sig_{AS_REQ} of the AS-REQ. The Pub_{AAC} includes a verification result Res_{AAC} of the digital certificate Certaac of the AAC, and the Res_{AAC} is obtained by the AS-AAC verifying the validity of the Cert_{AAC}. The Sig_{AS_REQ} is a digital signature calculated by the AS-REQ on to-be-signed data including the Pub_{AAC}. The REQ may determine whether the Pub_{AAC} can be trusted by verifying the Sig_{AS_REQ}. In the present disclosure, an object to be signed is called as the to-be-signed data.

It should be noted that if the AS-AAC trusted by the AAC is same as the AS-REQ trusted by the REQ, i.e., it is a non-roaming case, the AS trusted by both the REQ and the AAC may be represented as AS-AAC (of course, which may also be represented as AS-REQ). In this case, after the AAC sends the first authentication request message AACVeri to the AS-AAC (or represented as the AS-REQ), the AS-AAC (or represented as the AS-REQ) verifies whether the Certaac is valid to obtain a verification result Res_{AAC}, generates the Pub_{AAC} according to information including the Res_{AAC}, calculates the digital signature Sig_{AS_AAC} of the AS-AAC (or the digital signature Sig_{AS_REQ} of the AS-REQ) on the to-be-signed data including the Pub_{AAC}, generates the first authentication response message ASVeri according to information including the Pub_{AAC} and the Sig_{AS_AAC} (or represented as the Sig_{AS_REQ}), and sends the ASVeri to the AAC.

If the AS-AAC trusted by the AAC is different from the AS-REQ trusted by the REQ, i.e., it is a roaming case, after the AAC sends the first authentication request message AACVeri to the AS-AAC, the AS-AAC verifies whether the Certaac is valid to obtain a verification result Res_{AAC}, generates the Pub_{AAC} according to information including the Res_{AAC}, calculates a first digital signature Sig_{AS_AAC1} of AS-AAC on the to-be-signed data including the Pub_{AAC}, and sends a second authentication request message AS-AACVeri to the AS-REQ. The AS-AACVeri includes the Pub_{AAC} and the Sig_{AS_AAC1}. The AS-REQ verifies the Sig_{AS_AAC1} with the public key of the AS-AAC. After the verification is successful, the AS-REQ calculates a digital signature Sig_{AS_REQ} of the AS-REQ on the to-be-signed data including the Pub_{AAC}. Then, the AS-AAC receives the second authentication response message AS-REQVeri from the AS-REQ, and the AS-REQVeri includes the Pub_{AAC} and the Sig_{AS_REQ}. The AS-AAC generates a first authentication response message ASVeri according to information including the Pub_{AAC} and the Sig_{AS_REQ}, and sends the ASVeri to the AAC.

In operation S103, the REQ acquires an authentication result message AACAuth from the AAC.

The AACAuth includes encrypted identity authentication result information EncData_{AAC}. The EncData_{AAC} is obtained by encrypting to-be-encrypted data including the Pub_{AAC} and the Sig_{AS_REQ} by the AAC with a message encryption key through a symmetric encryption algorithm. The message encryption key may be obtained by negotiation between the REQ and the AAC, or may be pre-shared between the REQ and the AAC. The implementation of negotiation of the message encryption key between the REQ and the AAC will be described below. In this disclosure, an object to be encrypted is called as to-be-encrypted data.

In operation S104, the REQ decrypts the EncData_{AAC} with the message encryption key to obtain the Pub_{AAC} and the Sig_{AS_REQ}.

Because the EncData_{AAC} is obtained by encrypting to-be-encrypted data including the Pub_{AAC} and the Sig_{AS_REQ} by the AAC with the message encryption key through the symmetric encryption algorithm, after receiving the EncData_{AAC} from the AAC, the REQ may decrypt the EncData_{AAC} with the message encryption key to obtain the Pub_{AAC} and the Sig_{AS_REQ} in the ASVeri.

In operation S105, the REQ verifies the Sig_{AS_REQ} with a public key of the AS-REQ.

Because the REQ knows the public key of the AS trusted by the REQ, the REQ may verify the Sig_{AS_REQ} with the public key of the AS-REQ. If the verification is successful, the subsequent operation is performed.

In operation S106, the REQ determines an identity authentication result of the AAC according to the Res_{AAC} in the Pub_{AAC}.

Because Pub_{AAC} includes the Res_{AAC}, the Res_{AAC} reflects whether AAC is valid, thus the REQ may confirm whether the AAC is valid according to the Res_{AAC}, thereby ensuring that REQ can access a valid network.

According to the above technical solution, the Pub_{AAC} and the Sig_{AS_REQ} are encrypted with the message encryption key, so as to prevent exposure of the carried private and sensitive information carried in the process of AAC sending the authentication result message to the REQ, therefore, the attacker has no knowledge of whether the AAC is valid. In this way, it is possible to prevent the attacker from mainly attacking the valid AAC, illegal activities by using the private and sensitive information of the AAC can be avoid, security of the AAC, the REQ and even the network can be ensured. Furthermore, the authentication server is involved to ensure confidentiality of information related to the entity identity, meanwhile, a unilateral identity authentication for the AAC by the REQ is implemented in real-time, which lays a foundation for ensuring that the user communicates with a valid network.

Before the REQ determines the identity authentication result of the AAC, the REQ may also determine whether the verification for the digital signature of the AAC is successful. With reference to FIG. 1, in the operation S103, the AACAuth may also include the digital signature Sig_{AAC} of AAC. The to-be-signed data of the Sig_{AAC} includes other fields located in front of the Sig_{AAC} in the AACAuth, and correspondingly, the Pub_{AAC} also includes the Certaac. Before the operation S106, the REQ also needs to determine whether the verification for the Sig_{AAC} is successful. Only when the verification for the Sig_{AAC} is successful, the operation S106 may be performed. The REQ determines whether the verification for the Sig_{AAC} is successful in the following manner: the REQ verifies the Sig_{AAC} with the Certaac in Pub_{AAC} obtained by decrypting the EncData_{AAC}, and determines whether the verification for the Sig_{AAC} is successful according to the verification result.

In other embodiments, in the operation S101, the AACVeri may also include the digital signature Sig_{AAC} of the AAC, and the to-be-signed data of Sig_{AAC} includes other fields located in front of the Sig_{AAC} in the AACVeri. Then, before the operation S106, the REQ also needs to determine whether the verification for the Sig_{AAC} is successful. Only when the verification for the Sig_{AAC} is successful, the operation S106 may be performed. The REQ determines whether the verification for the Sig_{AAC} is successful in the following manner: the AS-AAC trusted by the AAC verifies the Sigaac with the Certaac in the AACVeri, and the subsequent process may be performed after the verification is successful. Therefore, if the REQ receives the AACAuth in the S103, the REQ determines that the verification for the Sigaac is successful.

The messages transmitted among the REQ, the AAC and the AS may also include parameter information such as a random number and an identity identification generated by the AAC and/or the REQ. In general circumstances, during the identity authentication process, the random number and/or the identity identification are unchanged when being transmitted through various messages. However, if the network jitters or the network is attacked, the parameter information such as the random number and/or the identity identification in the messages may be lost or tampered. Therefore, the consistency of the identity identification and/or the random numbers in the messages may be verified during the identity authentication, so as to ensure the reliability and freshness of the authentication result. Examples are described as follows.

With reference to FIG. 1, in some embodiments, the REQ generates a second random number Nonce_{REQ}. If the AAC acquires the Nonce_{REQ} and/or the identity ID_{REQ} of the REQ from the REQ, then the AACVeri in the operation S101 further includes the Nonce_{REQ} and/or ID_{REQ}. In the non-roaming case, the ASVeri in operation the S102 further includes the Nonce_{REQ} and/or the ID_{REQ}. In the roaming case, the AS-AACVeri sent from the AS-AAC to the AS-REQ further includes the Nonce_{REQ} and/or the ID_{REQ}, and the AS- REQVeri sent from the AS-REQ to the AS-AAC further includes the Nonce_{REQ} and/or ID_{REQ}, the ASVeri in operation S102 further includes the Nonce_{REQ} and/or ID_{REQ}. Correspondingly, in the AACAuth in the operation S103, the to-be-encrypted data of the EncData_{AAC} further includes the Nonce_{REQ} and/or the ID_{REQ}. In the operation S104, the REQ decrypts the EncData_{AAC} to further obtain the Nonce_{REQ} and/or the ID_{REQ}. Before the operation S106, the REQ also determines whether each of at least one of the Nonce_{REQ} or the ID_{REQ} obtained by decrypting the EncData_{AAC} is consistent with a respective one of the at least one of the Nonce_{REQ} generated by the REQ or ID_{REQ} owned by the REQ (i.e., the at least one of the Nonce_{REQ} or ID_{REQ} sent from the REQ to the AAC). If each of the at least one of the Nonce_{REQ} or ID_{REQ} obtained by decrypting the EncData_{AAC} is consistent with a respective one of the at least one of the Nonce_{REQ} generated by the REQ or the ID_{REQ} owned by the REQ, the REQ performs the operation S106. Otherwise, the REQ discards the AACAuth in the operation S103.

In order to further guarantee the reliability of the authentication result, the AACAuth in the operation S103 may also include a message integrity check code MacTag_{AAC}. The MacTag_{AAC} is calculated on other fields in the AACAuth other than the MacTag_{AAC} by the AAC through a message integrity check key. Correspondingly, before the operation S106, the REQ also verifies the MacTag_{AAC}, and if the verification is successful, the REQ performs the operation S106. When verifying the MacTag_{AAC}, the REQ calculates the MacTag_{AAC} on other fields in the AACAuth other than the MacTag_{AAC} with the message integrity check key, and compares the calculated MacTag_{AAC} with the MacTag_{AAC} in the received AACAuth. If the calculated MacTag_{AAC} is consistent with the MacTag_{AAC} in the received AACAuth, the verification is successful; otherwise, the verification is failed. The generation manner of the message integrity check key used by the REQ and the AAC will be described in the following embodiment.

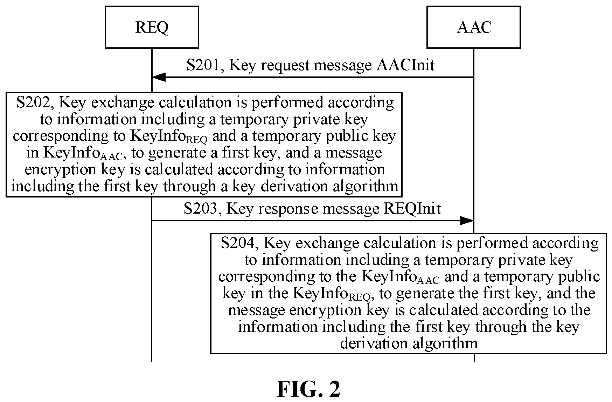

In the above embodiments, since the message encryption key used by the AAC and the REQ can be obtained by negotiation between the AAC and the REQ, the embodiments also provide a method for negotiating the message encryption key between the REQ and the AAC. With reference to FIG. 2, the method includes operations S201 to S204.

In operation S201, the AAC sends a key request message AACInit to the REQ.

The AACInit includes a key exchange parameter KeyInfo_{AAC} of the AAC, and the KeyInfoAAC includes a temporary public key of the AAC. The key exchange calculation refers to a key exchange algorithm such as a Diffie-Hellman (DH) algorithm. The AACInit may further include a first random number Nonce_{AAC} generated by the AAC.

The AACInit may further include Security capabilitiesaac which represents security capability parameter information supported by the AAC, including an identity authentication suite (which includes one or more methods for identity authentication), one or more symmetric encryption algorithms, one or more integrity check algorithms and/or one or more key derivation algorithms supported by the AAC, so as to allow the REQ to select a specific security policy for use. Therefore, the REQ may select, according to the Security capabilitiesaac, a specific security policy Security capabilities_{REQ} used by the REQ. The Security capabilities_{REQ} represents an identity authentication method, a symmetric encryption algorithm, an integrity check algorithm and/or a key derivation algorithm that the REQ determined correspondingly.

In operation S202, the REQ performs key exchange calculation according to information including a temporary private key corresponding to a key exchange parameter KeyInfo_{REQ} of the REQ and a temporary public key in the KeyInfoaac, to generate a first key, and calculates a message encryption key according to information including the first key through a key derivation algorithm.

If the AACInit in the operation S201 further includes the Nonce_{AAC} generated by the AAC, the REQ may perform the key exchange calculation according to the information including the temporary private key corresponding to the KeyInfo_{REQ} and the temporary public key in the KeyInfoaac, to generate the first key K1. The REQ calculates the message encryption key according to combining K1 with information including the Nonce_{AAC} and the Nonce_{REQ} generated by the REQ through a negotiated or preset key derivation algorithm. The negotiated key derivation algorithm may be a key derivation algorithm selected by the REQ according to the Security capabilities_{AAC} received from the AAC. The KeyInfo_{REQ} is a key exchange parameter generated by the REQ and includes the temporary public key of the REQ. The temporary private key corresponding to the KeyInfo_{REQ} is a temporary private key that is generated by the REQ and corresponds to the temporary public key of the REQ, i.e., the temporary public key and the temporary private key constitute a temporary public-private key pair.

In operation S203, the REQ sends a key response message REQInit to the AAC.

The REQInit includes the KeyInfo_{REQ}, such that the AAC calculates the message encryption key according to information including the temporary private key corresponding to the KeyInfoaac and the temporary public key in the KeyInfo_{REQ}. The temporary private key corresponding to the KeyInfoaac is a temporary private key that is generated by the AAC and corresponds to the temporary public key of the AAC, i.e., the temporary public key and the temporary private key are a temporary public-private key pair.

The REQInit may further include the Security capabilities_{REQ}. The REQInit may further include the Nonce_{REQ}, such that the AAC calculates the message encryption key according to information including the temporary private key corresponding to the KeyInfoaac, the temporary public key in the KeyInfo_{REQ}, the Nonce_{AAC} and the Nonce_{REQ}.

The REQInit may further include the Nonce_{AAC}, such that before calculating the message encryption key, the AAC may verify whether the Nonce_{AAC} in the REQInit is the consistent with the Nonce_{AAC} generated by the AAC, so as to ensure that the REQInit received by the AAC is a response message for the AACInit.

In operation S204, the AAC performs key exchange calculation according to information including the temporary private key corresponding to the KeyInfoaac and the temporary public key in the KeyInfo_{REQ}, to generate the first key, and calculates the message encryption key according to the information including the first key through the key derivation algorithm.

If the REQInit further includes the Nonce_{REQ}, the AAC may perform the key exchange calculation according to the information including the temporary private key corresponding to the KeyInfoaac and the temporary public key included in the KeyInfo_{REQ}, to generate the first key K1. The AAC calculates the message encryption key according to combining K1 with information including the Nonce_{AAC} and the Nonce_{REQ} through a negotiated or preset key derivation algorithm. The negotiated key derivation algorithm may be a key derivation algorithm selected by the AAC according to the Security capabilities_{REQ} received from the REQ.

It is to be noted that, in the embodiment of FIG, 2, the REQ and the AAC may also generate a message integrity check key. The implementations of the REQ and the AAC respectively generating the message integrity check key are the same as the implementations of the REQ and the AAC respectively generating the message encryption key in the embodiments of FIG, 2. For example, the AAC may drive a string of key data through the key derivation algorithm in the manner of the embodiment of FIG, 2. The key data may be used as the message encryption key and may also be used as the message integrity check key. Alternatively, one portion of the key data is used as the message encryption key, and the other portion of the key data is used as the message integrity check key. The AAC may also derive two same or different strings of key data through the key derivation algorithm in the manner of the embodiment of FIG. 2 successively, and one string is used as the message encryption key, the other string is used as the message integrity check key. The REQ may derive a string of key data through the key derivation algorithm in the manner of the embodiment of FIG. 2. The key data may be used as the message encryption key and may also be the message integrity check key. Alternatively, one portion of the key data is used as the message encryption key, and the other portion of the key data is used as the message integrity check key. The REQ may also derive two same or different strings of key data through the key derivation algorithm in the manner of the embodiment of FIG. 2 successively, and one string is used as the message encryption key, the other string is used as the message integrity check key.

An embodiment of the present application further provides a method for determining the first authentication server and/or the second authentication server used during the present authentication process through information interaction between the AAC and the REQ.

With reference to FIG. 2, the AAC contains the identity identification ID_{AS_AAC} of at least one authentication server trusted by the AAC in the AACInit in operation S201, and the REQ determines, according to the ID_{AS_AAC}, the identity identification ID_{AS_REQ} of at least one authentication server trusted by the REQ. During the implementation, the REQ selects, from the ID_{AS_AAC}, the identity identification of at least one authentication server that is trusted by the REQ as the ID_{AS_REQ}. If the selection fails, the REQ determines the identity identification of at least one authentication server trusted by the REQ as the ID_{AS_REQ} (the fact that the selection is successful corresponds to the non-roaming case, and the fact that the selection fails corresponds to the roaming case), and contains the ID_{AS_REQ} in the REQInit in operation S203 and sent to the AAC. Further, the AAC may determine the first authentication server according to the ID_{AS_AAC} and the ID_{AS_REQ}. For example, the AAC may determine whether the identity identification of at least one authentication server in the ID_{AS_REQ} is the same as the identity identification of at least one authentication server in the ID_{AS_AAC}. If yes, i.e., it is the non-roaming case, the AAC determines the first authentication server participating in the identity authentication from the identity identification of the at least one authentication server that is trusted by both the REQ and the AAC; if no, i.e., it is the roaming case, the AAC determines the first authentication server (i.e., the AS-AAC) participating in the identity authentication according to the ID_{AS_AAC}, and sends the ID_{AS_REQ} to the first authentication server (i.e., the AS-AAC), to enable the first authentication server (i.e., the AS-AAC) to determine the second authentication server (i.e., the AS-REQ) according to the ID_{AS_REQ}.

As another implementation, the AAC may send no ID_{AS_AAC} to the REQ, and the REQ contains the identity identification ID_{AS_REQ} of the at least one authentication server trusted by the REQ in the REQInit in operation S203. The determination of the first authentication server (i.e., the AS-AAC) and/or the second authentication server (i.e., the AS-REQ) participating in the identity authentication process according to the ID_{AS_REQ} and the identity identification ID_{AS_AAC} of the authentication server trusted by the AAC is implemented as in the previous implementation.

The authentication servers trusted by the REQ and the AAC may be the same or may be different, the fact that the authentication server trusted by the REQ is same as the authentication server trusted by the AAC represents the non-roaming case, and the fact that the authentication server trusted by the REQ is different from the authentication server trusted by the AAC represents the roaming case.

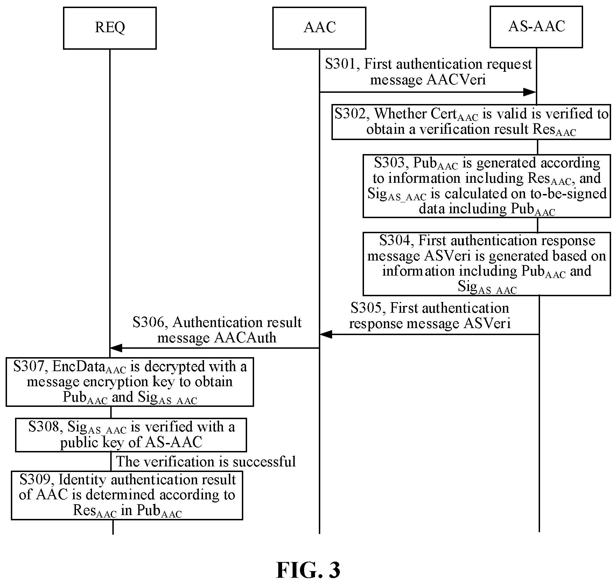

With reference to FIG. 3, FIG. 3 illustrates an embodiment of a method for identity authentication in a non-roaming case. The AS-AAC (or AS-REQ) may represent the authentication server trusted by both the REQ and the AAC. Before the embodiment is implemented, both the REQ and the AAC have a message encryption key already, and the message encryption key may be obtained by being shared between the REQ and the AAC in advance or negotiated through the method as illustrated in FIG. 2. Based on the embodiment of FIG. 1, the method for identity authentication of the embodiment of FIG. 3 further includes the following operations.

In operation S301, the AS-AAC receives a first authentication request message AACVeri from the AAC.

The AACVeri includes Cert_{AAC}.

In operation S302, the AS-AAC verifies whether the Certaac is valid to obtain a verification result Res_{AAC}.

In operation S303, the AS-AAC generates Pub_{AAC} according to information including Res_{AAC}, and calculates a digital signature Sig_{AS_AAC} of the AS-AAC on to-be-signed data including the Pub_{AAC}.

It should be noted that since AS-REQ is the same as the AS-AAC in the non-roaming case, therefore, the Sig_{AS_REQ} in ASVeri in operation S102 of the embodiment of FIG. 1 is the same as the Sig_{AS_AAC} in operation S303 of the embodiment of FIG. 3, which both are calculated and generated by the same AS.

In operation S304, the AS-AAC generates a first authentication response message ASVeri based on information including the Pub_{AAC} and the Sig_{AS_AAC}.

After generating the ASVeri, the AS-AAC sends the ASVeri to the AAC.

In FIG. 3, the operations S305-S309 corresponds to the operations S102-S106 in FIG. 1 respectively, and the AS-REQ and the Sig_{AS_REQ} in the operations S102-S105 correspond to the AS-AAC and the Sig_{AS_AAC} in the operations S305-S308 respectively.

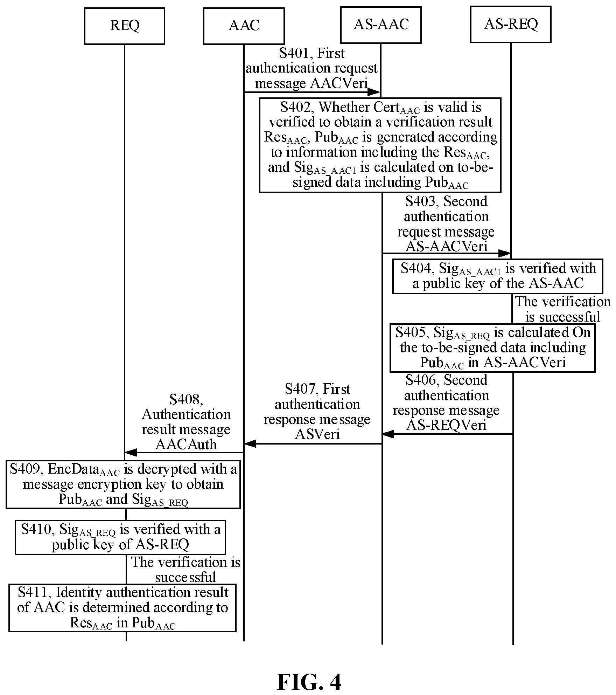

With reference to FIG. 4, FIG. 4 illustrates an embodiment of a method for identity authentication in a roaming case. Before the embodiment is implemented, both the REQ and the AAC have a message encryption key already, and the message encryption key may be obtained by being shared between the REQ and AAC parties in advance or negotiated through the method as illustrated in FIG. 2. Based on the embodiment of FIG. 1, the method for identity authentication of the embodiment of FIG. 4 further includes the following operations.

In operation S401, the AS-AAC receives the first authentication request message AACVeri from the AAC.

The AACVeri includes Cert_{AAC}.

In operation S402, the AS-AAC verifies whether the Certaac is valid to obtain a verification result Res_{AAC}. The AS-AAC generates a Pub_{AAC} according to information including Res_{AAC}, and calculates a first digital signature Sig_{AS_AAC1} of the AS-AAC on to-be-signed data including the Pub_{AAC}.

In operation S403, the AS-AAC sends a second authentication request message AS-AACVeri to the AS-REQ.

The AS-AACVeri includes the Pub_{AAC} and the Sig_{AS_AAC1}. Since the AS-AAC is not trusted by the REQ, and the AS-AAC and the AS-REQ trust each other, the AS-AAC needs to send the Pub_{AAC} to the AS-REQ, and the AS-REQ calculates the digital signature Sig_{AS_REQ} of the AS-REQ on the to-be-signed data including the Pub_{AAC}, so as to notify the REQ that Pub_{AAC} is trusted.

In operation S404, the AS-REQ verifies the Sig_{AS_AAC1} with a public key of the AS-AAC.

If the verification is successful, then the operation S405 is performed; and if the verification is failed, then the AS-AACVeri is discarded.

In operation S405, the AS-REQ calculates a digital signature Sig_{AS_REQ} of the AS-REQ on the to-be-signed data including the Pub_{AAC} in AS-AACVeri.

In operation S406, the AS-REQ sends a second authentication response message AS-REQVeri to the AS-AAC.

The AS-REQVeri includes the Pub_{AAC} and the Sig_{AS_REQ}. Since the REQ trusts the Pub_{AAC} received from AS-REQ, the AS-AAC needs to send the AS-REQVeri to the AAC through the first authentication response message ASVeri.

In FIG. 4, the operations S407-S411 correspond to the operations S102-S106 in FIG. 1 respectively.

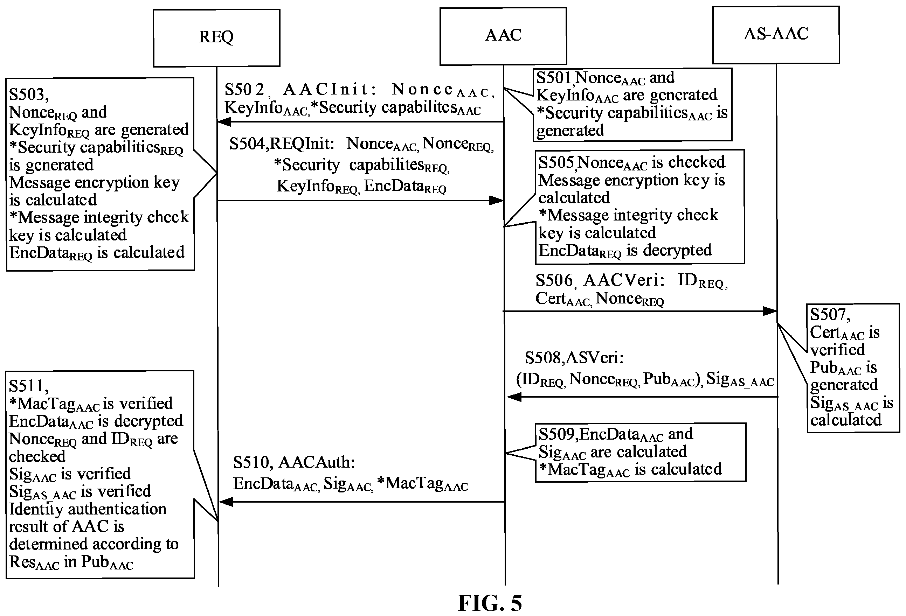

With reference to FIG. 5, FIG. 5 illustrates an embodiment of a method for identity authentication in a non-roaming case. The AS-AAC (or AS-REQ) may be used to represent the authentication server trusted by both the REQ and the AAC. In the embodiment, the process of negotiating the message encryption key between the REQ and the AAC is integrated into the identity authentication process, which is more convenient for engineering implementation. The method for identity authentication includes operations.

In operation S501, the AAC generates Nonce_{AAC} and KeyInfoaac, and the AAC generates the Security capabilities_{AAC} as needed.

In operation S502, the AAC sends a key request message AACInit to the REQ.

The AACInit includes the Nonce_{AAC}, KeyInfoaac and Security capabilities_{AAC}. The Security capabilities_{AAC} is an optional field, which represents security capability parameter information supported by the AAC and includes an identity authentication suite, one or more symmetric encryption algorithms, one or more integrity check algorithms and/or one or more key derivation algorithms supported by the AAC (which is applied to the entire disclosure).

In operation S503, the REQ generates the Nonce_{REQ} and the KeyInfo_{REQ}, and generates the Security capabilities_{REQ} as needed. The REQ performs key exchange calculation according to information including a temporary private key corresponding to the KeyInfo_{REQ} and a temporary public key in the KeyInfoaac, to generate the first key K1. The REQ calculates a message encryption key and a message integrity check key according to combining K1 with the Nonce_{AAC}, the Nonce_{REQ} and other information (where other information used by the REQ and the AAC are the same and optional, for example, a specific character string) through the negotiated or preset key derivation algorithm. The REQ calculates an encrypted identity identification EncData_{REQ} of the REQ with the message encryption key through a symmetric encryption algorithm.

The Security capabilities_{REQ} is an optional field and represents a specific security policy selected by REQ according to Security capabilities_{AAC}. Specifically, the REQ determines a method for identity authentication, a symmetric encryption algorithm, an integrity check algorithm and/or a key derivation algorithm (which is as applied to the entire disclosure) to be used. Whether the REQ generates the Security capabilities_{REQ} depends on whether the AACInit sent from the AAC to the REQ carries the Security capabilities_{AAC}. The operation of the REQ generating the message integrity check key is an optional operation, and this operation may also be performed later when required.

In operation S504, the REQ sends a key response message REQInit to the AAC.

The REQInit includes the Nonce_{AAC}, the Nonce_{REQ}, the Security capabilities_{REQ}, the KeyInfo_{REQ} and the EncData_{REQ}. The Nonce_{AAC} should be equal to the Nonce_{AAC} in the AACInit. The Security capabilities_{REQ} is an optional field, and to-be-encrypted data of the EncData_{REQ} includes the ID_{REQ}.

In operation S505, after receiving the REQInit, the AAC performs the following operations (1) to (3) (if there is no special explanation or logical relationship, operations numbered with (1), (2),... in this disclosure do not necessarily have a sequential order due to being numbered, which is applied to the entire disclosure).
(1) Whether the Nonce_{AAC} in the REQInit is the same as the Nonce_{AAC} generated by the AAC is checked, and if the Nonce_{AAC} in the REQInit is different from the Nonce_{AAC} generated by the AAC, the REQInit is discarded.
(2) The key exchange calculation is performed according to the information including the temporary private key corresponding to the KeyInfoaac and the temporary public key in the KeyInfo_{REQ}, to generate the first key K1. The K1 is combined with the Nonce_{AAC}, the Nonce_{REQ} and other information (where other information used by the REQ and the AAC are the same and optional, for example, a character specific string) to calculate the message encryption key and the message integrity check key through the negotiated or preset key derivation algorithm. The operation of the AAC generating the message integrity check key is an optional operation, and this operation can also be performed later when required.
(3) The EncData_{REQ} is decrypted with the message encryption key through the symmetric encryption algorithm to obtain the ID_{REQ}.

In operation S506, the AAC sends a first authentication request message AACVeri to the AS-AAC.

The AACVeri includes the ID_{REQ}, the Cert_{AAC} and the Nonce_{REQ}. Each of the ID_{REQ} and Nonce_{REQ} should be equal to a respective field in the REQInit.

In operation S507, after receiving the AACVeri, the AS-AAC performs following operations (1) and (2).
(1) Whether the Certaac is valid is verified to obtain the Res_{AAC}, and the Pub_{AAC} is generated according to information including the Certaac and the Res_{AAC}.
(2) The Sig_{AS_AAC} is calculated.

In operation S508, the AS-AAC sends a first authentication response message ASVeri to the AAC.

The ASVeri includes the ID_{REQ}, the Nonce_{REQ}, the Pub_{AAC} and the Sig_{AS_AAC}. Each of the ID_{REQ} and Nonce_{REQ} should be equal to a respective field in the AACVeri. The to-be-signed data of the Sig_{AS_AAC} includes the ID_{REQ}, the Nonce_{REQ} and the Pub_{AAC}.

In operation S509, after receiving the ASVeri, the AAC performs following operations (1) to (3).
(1) The EncData_{AAC} is calculated with the message encryption key.
(2) The Sig_{AAC} is calculated.
(3) The MacTag_{AAC} is calculated as needed.

In operation S510, the AAC sends an authentication result message AACAuth to the REQ.

The AACAuth includes the EncData_{AAC}, the Sig_{AAC} and the MacTag_{AAC}. The to-be-signed data of the Sig_{AAC} includes other fields located in front of the Sigaac in the AACAuth. The to-be-encrypted data of the EncData_{AAC} includes the ID_{REQ}, the Nonce_{REQ}, the Pub_{AAC} and the Sig_{AS_AAC}. The to-be-encrypted data is obtained from the ASVeri. The MacTag_{AAC} is an optional field. When it is necessary to further verify whether the message exchanged between the AAC and the REQ is integral, the AAC may calculate the MacTag_{AAC}. The calculation of the MacTag_{AAC} may be implemented by calculating the MacTag_{AAC} on other fields in the AACAuth other than the MacTag_{AAC} through a message integrity check key.

In operation S511, after receiving the AACAuth, the REQ performs following operations (1) to (6).
(1) If the AACAuth includes the MacTag_{AAC}, the MacTag_{AAC} is verified.
   The verification process is implemented as follows: the MacTag_{AAC} is locally calculated on other fields in the AACAuth other than the MacTag_{AAC} with the message integrity check key through an integrity check algorithm (a manner for calculation is the same as a manner for calculating the MacTag_{AAC} by the AAC), and the calculated MacTag_{AAC} is compared with the MacTag_{AAC} in the received AACAuth.
(2) The EncData_{AAC} is decrypted with the message encryption key to obtain the ID_{REQ}, the Nonce_{REQ}, the Pub_{AAC} and the sig_{AS_AAC}.
(3) Whether the decrypted ID_{REQ} is the same as the identity ID_{REQ} of REQ and whether the decrypted Nonce_{REQ} is the same as the Nonce_{REQ} generated by the REQ are checked.
(4) The Sig_{AAC} is verified with the Certaac in the Pub_{AAC}.
(5) The SigA_{S_AAC} is verified with the public key of the AS-AAC.
(6) After all the checks and verifications are successful, an identity authentication result of the AAC is determined according to the Res_{AAC} in the Pub_{AAC}. If any one of the above checks and verifications is failed, the AACAuth will be discarded immediately.

It should be noted that the operation of calculating the Sig_{AAC} in operation S509 can also be performed firstly in operation S506, i.e., in operation S506, the AAC calculates the signature Sigaac on the ID_{REQ}, the Cert_{AAC} and the Nonce_{REQ} in the AACVeri. Then the AACVeri in operation S506 also includes the Sig_{AAC}, and the AS-AAC also needs to verify the Sig_{AAC} in operation S507, and then performs subsequent operations when the verification is successful. In this case, the AAC does not calculate the Sig_{AAC} in the operation S509. Accordingly, the AACAuth includes no Sig_{AAC} in the operation S510, and the Sig_{AAC} is no longer verified by the REQ in the operation S511. In this case, the Pub_{AAC} may include no Cert_{AAC}.

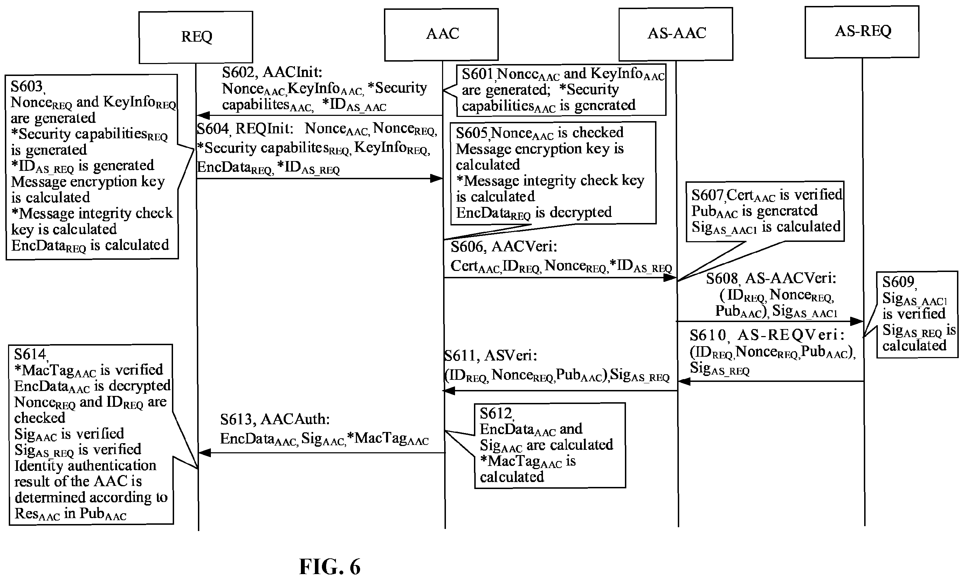

With reference to FIG. 6, FIG. 6 illustrates an embodiment of a method for identity authentication in the roaming case. In this embodiment, the process of negotiating the message encryption key between the REQ and the AAC is integrated into the identity authentication process, which is more convenient for engineering implementation. The method for identity authentication includes operations.

In operation S601, the AAC generates Nonce_{AAC} and KeyInfoaac, and the AAC generates Security capabilities_{AAC} as needed.

In operation S602, the AAC sends a key request message AACInit to the REQ.

The AACInit includes the Nonce_{AAC}, the KeyInfoaac, the Security capabilities_{AAC} and the ID_{AS_AAC}. The ID_{AS_AAC} and the Security capabilities_{AAC} are optional fields. The ID_{AS_AAC} represents an identity of at least one authentication server trusted by the AAC, which is used for the REQ to determine, according to the ID_{AS_AAC}, whether there is an authentication server trusted by both the AAC and the REQ.

In operation S603, the REQ generates Nonce_{REQ} and KeyInfo_{REQ}, and the REQ generates Security capabilities_{REQ} and the ID_{AS_REQ} as needed. The key exchange calculation is performed according to information including a temporary private key corresponding to the KeyInfo_{REQ} and a temporary public key in the KeyInfoaac to generate a first key K1. The K1 is combined with the Nonce_{AAC}, the Nonce_{REQ} and other information (where other information used by the REQ and the AAC are the same and optional, for example, a specific character string), to calculate the message encryption key and message integrity check key through the negotiated or preset key derivation algorithm. The EncData_{REQ} is calculated with the message encryption key through a symmetric encryption algorithm.

The ID_{AS_REQ} represents the identity identification of at least one authentication server trusted by the REQ, when the ID_{AS_AAC} is included in AACInit, the REQ selects, from the authentication servers trusted by the REQ, the identity identification of at least one authentication server identical to the identity identification in the ID_{AS_AAC} as the ID_{AS_REQ}. If the selection is failed, the REQ determines the identity of the at least one authentication server trusted by the REQ as the ID_{AS_REQ} (this embodiment corresponds to the situation that selection is failed). When the AACInit includes no ID_{AS_AAC}, the REQ determines the identity of the at least one authentication server trusted by the REQ as the ID_{AS_REQ}. The operation of the REQ calculating the message integrity check key is an optional operation, which can be performed later when required.

In operation S604, the REQ sends a key response message REQInit to the AAC.

The REQInit includes the Nonce_{AAC}, the Nonce_{REQ}, the Security capabilities_{REQ}, the KeyInfo_{REQ}, the EncData_{REQ} and the ID_{AS_REQ}. The Security capabilities_{REQ} and the ID_{AS_REQ} are optional fields. The Nonce_{AAC} should be equal to a corresponding field in the AACInit. The to-be-encrypted data of the EncData_{REQ} includes the ID_{REQ}.

In operation S605, after receiving the REQInit, the AAC performs following operations (1) to (4).
(1) Whether the Nonce_{AAC} in the REQInit is the same as the Nonce_{AAC} generated by the AAC is checked, and if the Nonce_{AAC} in the REQInit is different from the Nonce_{AAC} generated by the AAC, the REQInit is discarded.
(2) The key exchange calculation is performed according to the information including the temporary private key corresponding to the KeyInfoaac and the temporary public key in the KeyInfo_{REQ}, to generate the first key K1. The K1 is combined with the Nonce_{AAC}, the Nonce_{REQ} and other information (where other information used by the REQ and the AAC is the same and optional, for example, a specific character string) to calculate the message encryption key and the message integrity check key with the negotiated or preset key derivation algorithm. The operation of the AAC generating the message integrity check key is an optional operation, which can also be performed later when required.
(3) EncData_{REQ} is decrypted with the message encryption key through a symmetric encryption algorithm to obtain the ID_{REQ}.
(4) If the ID_{AS_REQ} is carried in the REQInit and the ID_{AS_AAC} is carried in the AACInit, then AAC determines whether the ID_{AS_REQ} includes the identity identification of at least one authentication server which is the same as the identity identification of at least one authentication server in the ID_{AS_AAC}. If yes, i.e., it is the non-roaming case, the AAC determines a first authentication server participating in the identity authentication from the identity identification of the at least one authentication server trusted by both the REQ and the AAC. If not, i.e., it is the roaming case, the AAC determines the first authentication server (i.e., AS-AAC) participating in the identity authentication according to the ID_{AS_AAC}, and sends the ID_{AS_REQ} to the AS-AAC, to enable the AS-AAC to determine a second authentication server (i.e., the AS-REQ) according to the ID_{AS_REQ}.

Optionally, if the ID_{AS_REQ} is carried in the REQInit but the ID_{AS_AAC} is not carried in the AACInit, the AAC determines whether the ID_{AS_REQ} includes the identity identification of at least one authentication server which is the same as the identity identification of at least one authentication server trusted by the AAC. If yes, i.e., it is the non-roaming case, the AAC determines the first authentication server participating in the identity authentication from the identity identification of the at least one first authentication server trusted by both the REQ and the AAC. If not, i.e., it is the roaming case, the AAC determines the first authentication server (i.e., AS-AAC) participating in the identity authentication according to the authentication server trusted by the AAC, and sends the ID_{AS_REQ} to the AS-AAC, to enable the AS-AAC to determine the second authentication server (i.e., the AS-REQ) according to the ID_{AS_REQ}.

It should be noted that the determination result in this embodiment is the roaming case.

In operation S606, the AAC sends a first authentication request message AACVeri to the AS-AAC.

The AACVeri includes the Cert_{AAC}, the ID_{REQ}, the Nonce_{REQ} and the ID_{AS_REQ}. Each of the ID_{REQ}, the Nonce_{REQ} and the ID_{AS_REQ} should be equal to a respective field in the REQInit. The ID_{AS_REQ} is an optional field which is used for the AS-AAC to determine, according to the ID_{AS_REQ}, the authentication server trusted by the REQ.

In operation S607, after receiving the AACVeri, the AS-AAC performs following operations (1) to (3).
(1) Whether the Certaac is valid is verified to obtain the Res_{AAC}, and the Pub_{AAC} is generated according to information including the Certaac and the Res_{AAC}.
(2) If the ID_{AS_REQ} is included in the AACVeri, the AS-AAC determines the second authentication server (i.e., the AS-REQ) according to the ID_{AS_REQ}. The fact that AACVeri includes no ID_{AS_REQ} represent that the AS-AAC has already known the AS-REQ.
(3) A first digital signature Sig_{AS_AAC1} is calculated.

In operation S608, the AS-AAC sends a second authentication request message AS-AACVeri to the AS-REQ.

The AS-AACVeri includes the ID_{REQ}, the Nonce_{REQ}, the Pub_{AAC} and the SigAS_AAC1. Each of the ID_{REQ} and the Nonce_{REQ} should be equal to a respective one field in the AACVeri. The to-be-signed data of the Sig_{AS_AAC1} includes other fields located in front of the Sig_{AS_AAC1}in AS-AACVeri. For example, when the AS-AACVeri includes the ID_{REQ}, the Nonce_{REQ}, the Pub_{AAC} and the Sig_{AS_AAC1} in sequence, the to-be-signed data of the Sig_{AS_AAC1} includes the ID_{REQ}, the Nonce_{REQ} and the Pub_{AAC}.

In operation S609, after the receiving the AS-AACVeri, the AS-REQ performs following operations (1) and (2).
(1) The Sig_{AS_AAC1} is verified with the public key of the AS-AAC, and if the verification is failed, the AS-AACVeri is discarded.
(2) The Sig_{AS_REQ} is calculated.

In operation S610, the AS-REQ sends a second authentication response message AS-REQVeri to the AS-AAC.

The AS-REQVeri includes the ID_{REQ}, the Nonce_{REQ}, the Pub_{AAC} and the Sig_{AS_REQ}. Each of the ID_{REQ}, Nonce_{REQ} and Pub_{AAC} should be equal to a respective one field in the AS-AACVeri. The to-be-signed data of the Sig_{AS_REQ} includes other fields located in front of the Sig_{AS_REQ} in the AS-REQVeri.

In operation S611, after receiving the AS-REQVeri, the AS-AAC sends a first authentication response message ASVeri to the AAC.

The ASVeri includes the ID_{REQ}, the Nonce_{REQ}, the Pub_{AAC} and the Sig_{AS_REQ}. Each of the ID_{REQ}, the Nonce_{REQ}, the Pub_{AAC}, and the Sig_{AS_REQ} should be equal to a respective field in the AS-REQVeri.

In operation S612, after receiving the ASVeri, the AAC performs following operations (1) to (3).
(1) The EncData_{AAC} is calculated with the message encryption key.
(2) The Sig_{AAC} is calculated.
(3) The MacTag_{AAC} is calculated as needed.

In operation S613, the AAC sends an authentication result message AACAuth to the REQ.

The AACAuth includes the EncData_{AAC}, the Sig_{AAC} and the MacTag_{AAC}. The to-be-signed data of the Sig_{AAC} includes other fields located in front of the Sigaac field in the AACAuth. The MacTag_{AAC} is an optional field, and the MacTag_{AAC} is calculated as described above. The to-be-encrypted data of the EncData_{AAC} includes the ID_{REQ}, the Nonce_{REQ}, the Pub_{AAC}, and the Sig_{AS_REQ} that are obtained from the ASVeri.

In operation S614, after receiving the AACAuth, the REQ performs following operation (1) to (6).
(1) If the MacTag_{AAC} is included in the AACAuth, the MacTag_{AAC} is verified, and the verification process is as described above.
(2) The EncData_{AAC} is decrypted with the message encryption key to obtain the ID_{REQ}, the Nonce_{REQ}, the Pub_{AAC} and the Sig_{AS_REQ}.
(3) Whether the decrypted ID_{REQ} is the same as the identity identification ID_{REQ} of the REQ and whether the decrypted Nonce_{REQ} is the same as the Nonce_{REQ} generated by the REQ are checked.
(4) The Sig_{AAC} is verified with the Certaac in the decrypted Pub_{AAC}.
(5) The Sig_{AS_REQ} is verified with the public key of the AS-REQ.
(6) After all the above checks and verifications are successful, an identity authentication result of the AAC is determined according to the Res_{AAC} in the Pub_{AAC}. If any one of the above checks and verifications is failed, the AACAuth will be discarded immediately.

It should be noted that the operation of calculating the Sigaac in the operation S612 can also be performed firstly in the operation S606, i.e., in the operation S606, the AAC calculates the signature Sigaac on the Cert_{AAC}, the ID_{REQ}, the Nonce_{REQ} and the ID_{AS_REQ} in the AACVeri, the ID_{AS_REQ} is an optional field. Then the AACVeri in the operation S606 also includes the Sig_{AAC}, and the AS-AAC is also required to verify the Sig_{AAC} in the operation S607. After the verification is successful, subsequent operations are performed. In this case, the AAC does not calculate the Sigaac in the operation S612. Correspondingly, the AACAuth in the operation S613 includes no Sig_{AAC}, and the Sig_{AAC} is no longer verified by the REQ in the operation S614. In this case, the Pub_{AAC} may include no Cert_{AAC}.

In the above embodiments, each message may further carry a hash value HASHx _{Y}, and the hash value HASHx _{Y} is obtained by a sender entity X of the message performing calculation on the received latest preceding message sent by an opposite-end entity Y using a hash algorithm, and the hash value is used for the opposite-end entity Y to verify whether the entity X receives the complete latest preceding message. The HASH_{REQ_AAC} represents a hash value calculated by the REQ on a latest preceding message received from the AAC. The HASH_{AAC_REQ} represents a hash value calculated by the AAC on a latest preceding message received from the REQ. The HASH_{AAC_AS-AAC} represents a hash value calculated by the AAC on a latest preceding message received from the AS-AAC. The HASH_{AS-AAC_AAC} represents a hash value calculated by the AS-AAC on a latest preceding message received from the AAC. The HASH_{AS-AAC_AS-REQ} represents a hash value calculated by the AS-AAC on a latest preceding message received from the AS-REQ. The HASH_{AS-REQ_AS-AAC} represents a hash value calculated by the AS-REQ on a latest preceding message received from the AS-AAC. If the message currently sent by the sender entity X is the first message in the interaction between the entity X and the entity Y, which means that the entity X has not received a preceding message from the opposite-end entity Y previously, and the HASH_{X_Y} may not be included in the message or may be meaningless.

Correspondingly, after the opposite-end entity Y receives the message from the entity X, if the message includes the HASH_{X_Y}, the entity Y ignores the HASH_{X_Y} when the entity Y has not sent the preceding message to the entity X previously; and when the entity Y has sent the preceding message to the entity X previously, the entity Y locally calculates, through the hash algorithm, the hash value on the latest preceding message sent to the entity X, and compares the hash value with the HASH_{X_Y} carried in the received message. If the calculated hash value is consistent with the HASH_{X_Y} carried in the received message, the sequence operations are performed, otherwise, the message is discarded or the current authentication process is finished.

In the present disclosure, for the entity X, the preceding message sent by the opposite-end entity Y to the entity X refers to the message previously received from the opposite-end entity Y by the entity X before the entity X sends the message M to the opposite-end entity Y The last preceding message sent by the opposite-end entity Y to the entity X refers to the last message previously received from the opposite-end entity Y by the entity X before the entity X sends the message M to the opposite-end entity Y If the message M sent by the entity X to the opposite-end entity Y is the first message in the interaction between the entity X and the entity Y, there is no preceding message sent by the opposite-end entity Y to the entity X before the entity X sends the message M to the opposite-end entity Y

It should be noted that the optional fields and optional operations in the above-mentioned embodiments of FIG. 5 and FIG. 6 are denoted by "*" in FIG. 5 and FIG. 6 of the accompanying drawings of the disclosure. The sequence of the content included in the messages involved in all of the above embodiments is not limited. In addition, unless otherwise specified, the sequence for processing messages after a message receiver receives the relevant messages and a sequence for processing the content included in the messages are not limited.

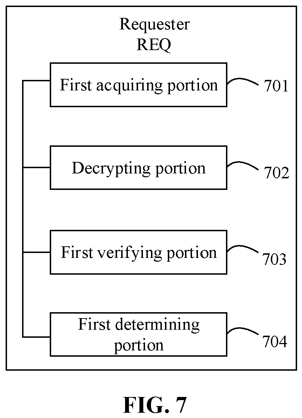

Based on the embodiments corresponding to FIG. 1 to FIG. 6, and with reference to FIG. 7, the embodiments of the present disclosure also provide an REQ including a first acquiring portion 701, a decrypting portion 702, a first verifying portion 703 and a first determining portion 704.

The first acquiring portion 701 is configured to acquire an authentication result message from an authentication access controller, AAC. The authentication result message includes an encrypted identity authentication result information, and the encrypted identity authentication result information is obtained by encrypting to-be-encrypted data including an identity authentication result information Pub_{AAC} and a digital signature of a second authentication server trusted by the REQ with a message encryption key by the AAC.

The Pub_{AAC} and the digital signature of the second authentication server are acquired by the AAC from a first authentication response message sent by a first authentication server trusted by the AAC, and the Pub_{AAC} includes a verification result for a digital certificate of the AAC.

The decrypting portion 702 is configured to decrypt the encrypted identity authentication result information with the message encryption key to obtain the Pub_{AAC} and the digital signature of the second authentication server.

The first verifying portion 703 is configured to verify the digital signature of the second authentication server with a public key of the second authentication server.

The first determining portion 704 is configured to, in response to the verification being successful, determine an identity authentication result of the AAC according to the verification result in the Pub_{AAC}.

In some embodiments, the REQ further includes a second acquiring portion, a calculating portion and a sending portion.

The second acquiring portion is configured to acquire a key request message from the AAC, where the key request message includes a key exchange parameter of the AAC.

The calculating portion is configured to perform key exchange calculation according to information including a temporary private key corresponding to a key exchange parameter of the REQ and a temporary public key in the key exchange parameter of the AAC, to generate a first key, and calculate, according to information including the first key, the message encryption key through a key derivation algorithm.

The sending portion configured to send a key response message to the AAC. The key response message includes the key exchange parameter of the REQ.

In some embodiments, the key request message acquired by the second acquiring portion further includes a first random number generated by the AAC; and the key response message sent by the sending portion further includes a second random number generated by the REQ

The calculating portion is further configured to calculate the message encryption key according to information including the first key, the first random number, and the second random number.

In some embodiments, in response to the key response message sent by the sending portion further including the second random number, the first authentication response message further includes the second random number, and the to-be-encrypted data of the encrypted identity authentication result information acquired by the first acquiring portion 701 further includes the second random number. The decrypting portion 702 is further configured to decrypt the encrypted identity authentication result information with the message encryption key to obtain the second random number, and the first verifying portion 703 is further configured to verify whether the second random number obtained by the decrypting portion 702 is consistent with the second random number generated by the REQ.

In some embodiments, the REQ further includes an encrypting portion configured to encrypt information including the identity identification of the REQ with the message encryption key calculated by the calculating portion, to obtain an encrypted identity identification. The key response message sent by the sending portion further includes the encrypted identity identification

In some embodiments, in response to the key response message sent by the sending portion including the encrypted identity identification, the first authentication response message further includes the identity identification of the REQ, the to-be-encrypted data of the encrypted identity authentication result information acquired by the first acquiring portion 701 further includes the identity identification of the REQ. The decrypting portion 702 is further configured to decrypt the encrypted identity authentication result information to obtain the identity identification of the REQ, and the first verifying portion 703 is further configured to verify whether the identity identification of the REQ obtained by the decrypting portion 702 is consistent with the identity identification owned by the REQ.

In some embodiments, the key request message acquired by the second acquiring portion further includes security capability parameter information supported by the AAC, and the REQ further includes a second determining portion. The second determining portion is configured to determine a specific security policy used by the REQ according to the security capability parameter information.

The key response message sent by the sending portion further includes the specific security policy.

In some embodiments, the key request message acquired by the second acquiring portion further includes the identity identification of at least one authentication server trusted by the AAC, and the REQ further includes a third determining portion.

The third determining portion is configured to determine the identity identification of at least one authentication server trusted by the REQ according to the identity identification of the at least one authentication server trusted by the AAC.

The key response message sent by the sending portion further includes the identity identification of the at least one authentication server trusted by the REQ.

In some embodiments, the key response message sent by the sending portion further includes the identity identification of at least one authentication server trusted by the REQ.

In some embodiments, the first determining portion 704 is further configured to, before determining the identity authentication result of the AAC, determine whether verification of a digital signature of the AAC is successful, and in response to the verification of the digital signature of the AAC being successful, determine the identity authentication result of the AAC according to the verification result in the Pub_{AAC}.

In some embodiments, the first determining portion 704 is further configured to perform the following operation.
in response to the first acquiring portion acquiring the authentication result message, the first determining portion is configured to determine that the verification of the digital signature of the AAC is successful, wherein when a first authentication request message sent by the AAC to the first authentication server trusted by the AAC further includes the digital certificate of the AAC and the digital signature of the AAC, the digital signature of the AAC is verified by the first authentication server with the digital certificate of the AAC.

Alternatively, the first determining portion 704 is further configured to, in response to the authentication result message further including the digital signature of the AAC and the Pub_{AAC} further including the digital certificate of the AAC, verify the digital signature of the AAC with the digital certificate of the AAC, and determine whether the verification of the digital signature of the AAC is successful according to a verification result.

In some embodiments, the authentication result message acquired by the first acquiring portion 701 further includes a message integrity check code calculated by the AAC, and the REQ further includes a second verifying portion.

The second verifying portion is configured to verify the message integrity check code in the authentication result message with a message integrity check key. The message integrity check key is generated in a same way as the message encryption key.

In some embodiments, the REQ calculates a hash value according to a latest preceding message received from the AAC and sends a message containing the hash value to the AAC.

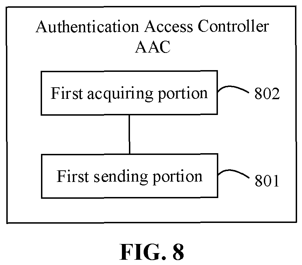

Based on the embodiments corresponding to FIG. 1 to FIG. 6 and with reference to FIG. 8, the embodiments of the present disclosure also provide an AAC including a first sending portion 801 and a first acquiring portion 802.

The first sending portion 801 is configured to send a first authentication request message to a first authentication server trusted by the AAC. The first authentication request message includes a digital certificate of the AAC.

The first acquiring portion 802 is configured to acquire a first authentication response message from the first authentication server. The first authentication response message includes identity authentication result information Pub_{AAC} and a digital signature of a second authentication server trusted by an REQ, and the Pub_{AAC} includes a verification result for the digital certificate of the AAC.

The first sending portion 801 is further configured to send an authentication result message to the REQ. The authentication result message includes an encrypted identity authentication result information, and the encrypted identity authentication result information is obtained by encrypting to-be-encrypted data including the Pub_{AAC} and the digital signature of the second authentication server with a message encryption key by the AAC.

In some embodiments, the AAC further includes a second sending portion, a second acquiring portion and a calculating portion.

The second sending portion is configured to send a key request message to the REQ. The key request message includes a key exchange parameter of the AAC.

The second acquiring portion is configured to acquire a key response message from the REQ, where the key response message includes a key exchange parameter of the REQ.

The calculating portion is configured to perform key exchange calculation according to information including a temporary private key corresponding to the key exchange parameter of the AAC and a temporary public key in the key exchange parameter of the REQ, to generate a first key; and calculate, according to information including the first key, the message encryption key through a key derivation algorithm.

In some embodiments, the key request message sent by the second sending portion further includes a first random number generated by the AAC, and the key response message acquired by the second acquiring portion further includes a second random number generated by the REQ

The calculating portion is further configured to calculate the message encryption key according to information including the first key, the first random number, and the second random number.

In some embodiments, the key response message acquired by the second acquiring portion further includes the first random number, and the AAC further includes a verifying portion.

The verifying portion is configured to verify whether the first random number in the key response message is consistent with the first random number generated by the AAC.

In some embodiments, the key response message acquired by the second acquiring portion further includes the second random number generated by the REQ, the first authentication request message sent by the first sending portion 801 further includes the second random number. Accordingly, the first authentication response message acquired by the first acquiring portion 802 further includes the second random number, and the to-be-encrypted data of the encrypted identity authentication result information sent by the first sending portion 801 further includes the second random number

In some embodiments, the key response message acquired by the second acquiring portion further includes an encrypted identity identification generated by the REQ, and the AAC further includes a decrypting portion configured to decrypt the encrypted identity identification with the message encryption key calculated by the calculating portion to obtain the identity identification of the REQ.

In some embodiments, in response to the decrypting portion obtaining the identity identification of the REQ, the first authentication request message sent by the first sending portion 801 further includes the identity identification of the REQ. The first authentication response message acquired by the first acquiring portion 802 further includes the identity identification of the REQ, and the to-be-encrypted data of the encrypted identity authentication result information identity sent by the first sending portion 801 further includes the identity identification of the REQ.

In some embodiments, the key request message sent by the second sending portion further includes security capability parameter information supported by the AAC, and the key response message acquired by the second acquiring portion further includes a specific security policy used by the REQ determined by the REQ according to the security capability parameter information.

In some embodiments, the key request message sent by the second sending portion further includes the identity identification of at least one authentication server trusted by the AAC, and the key response message acquired by the second acquiring portion further includes the identity identification of at least one authentication server trusted by the REQ, and the AAC further includes a first determining portion.

The first determining portion is configured to determine the first authentication server participating in the identity authentication according to the identity identification of the at least one authentication server trusted by the REQ in the key response message and the identity identification of the at least one authentication server trusted by the AAC in the key request message.

In some embodiments, the key response message acquired by the second acquiring portion further includes the identity identification of at least one authentication server trusted by the REQ, and the AAC further includes a second determining portion.

The second determining portion is configured to determine the first authentication server participating in the identity authentication according to the identity identification of the at least one authentication server trusted by the REQ and the identity identification of an authentication server trusted by the AAC.

In some embodiments, the authentication result message sent by the first sending portion further includes a message integrity check code, the message integrity check code is calculated on other fields in the authentication result message other than the message integrity check code by the AAC through a message integrity check key. The message integrity check key is generated in a same way as the message encryption key.

In some embodiments, the AAC calculates a hash value according to a latest preceding message received from the REQ and sends a message containing the hash value to the REQ; and the AAC calculates a hash value according to a latest preceding message received from the first authentication server and sends a message containing the hash value to the first authentication server.

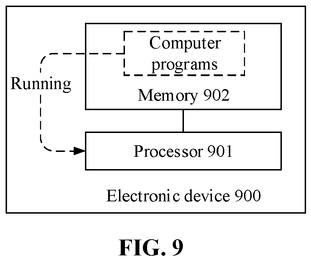

FIG. 9 is a schematic structural diagram of an electronic device according to an embodiment of the present disclosure. As illustrated in FIG. 9, the electronic device 900 may be an REQ or an AAC as described below. The electronic device 900 includes a processor 901 and a memory 902 configured to store computer programs. The processor 901 is configured to call and run the computer programs stored in the memory 902 to perform the operations in any of the above embodiments performed by the following REQ or the AAC. The processor 901 and the memory 902 of the electronic device 900 may be the processor 901 and the memory 902 of the REQ or the AAC respectively.

With reference to FIG. 9, the following is exemplary description of the REQ or the AAC.

Embodiments of the present disclosure also provide an REQ, including a processor and a memory. The memory is configured to store computer programs, and the processor is configured to call and run the computer programs stored in the memory to perform the operations performed by the REQ in any of the above embodiments.

It should be understood that the REQ may implement the corresponding processes implemented by REQ in the various methods of the embodiments of the present disclosure, which will not be elaborated herein for the sake of brevity.

The embodiments of the disclosure also provide an AAC, including a processor and a memory. The memory is configured to store computer programs, and the processor is configured to call and run the computer programs stored in the memory to perform the operations performed by the AAC in any of the above embodiments.

It should be understood that the AAC may implement the corresponding processes implemented by the AAC in the various methods of the embodiments of the present disclosure, which will not be elaborated herein for the sake of brevity.

It should be noted that the processor in the REQ or the AAC in the embodiments of the present disclosure may also perform the methods in other embodiments, such as other methods in the above method embodiments, which are not limited in the embodiments of the present disclosure.

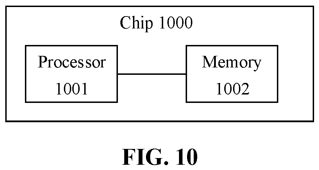

FIG. 10 is a schematic structural diagram of a chip according to an embodiment of the present disclosure. As illustrated in FIG. 10, the chip 1000 includes a processor 1001 and a memory 1002. The processor 1001 is configured to call and run computer programs from the memory 1002, to cause an REQ with the chip 1000 to perform the operations performed by the REQ in any of the above embodiments, or to cause an AAC, mounted with the chip 1000 to perform the operations performed by the AAC in any of the above embodiments. The memory 1002 may be disposed inside the chip 1000 or the memory 1002 may be disposed outside the chip 1000.

Embodiments of the present disclosure also provide a computer storage medium configured to store computer programs that cause an REQ to perform the operations performed by the REQ in any of the above embodiments, or cause an AAC to perform the operations performed by the AAC in any of the above embodiments.

Embodiments of the disclosure also provide a computer program that causes an REQ to perform the operations performed by the REQ in any of the above embodiments, or causes an AAC to perform the operations performed by the AAC in any of the above embodiments.

Those of ordinary skill in the art should understand that all or part of the steps of the method embodiments may be implemented by a program instructing related hardware, the program may be stored in a computer storage medium, and is executed to perform the steps of the method embodiments. The computer storage medium may be at least one of the following mediums: a read-only memory (ROM), a random access memory (RAM) and various mediums that can store program codes, such as a magnetic disk, or an optical disk. Each component, chip or processor in the embodiments of the present application may be an integrated circuit chip and has a signal processing capacity. During implementation, steps of the method embodiments may be performed by an integrated logical circuit of hardware in the processor or an instruction in a software form. Each component, chip or processor may include the integration of any one or at least two of the following: a general processor, an application specific integrated circuit (ASIC), a digital signal processor (DSP), a digital signal processing device (DSPD), a programmable logic device (PLD), a field programmable gate array (FPGA), a Central Processing Unit (CPU), a graphics processing unit (GPU), a neural-network processing unit (NPU), a controller, a microcontroller, a microprocessor, a programmable logic device, a discrete gate or transistor logic device, and a discrete hardware component.

It is to be noted that, various embodiments in this specification are described in a progressive manner, and references may be made to each other for the same and similar parts among the various embodiments, and each embodiment focuses on the differences from other embodiments. In particular, for the device and system embodiments, since the device and system embodiments are consistent with and correspond to the method embodiments, they are simply described, and related parts may refer to the partial descriptions of the method embodiments. The above-described device and system embodiments are merely exemplary. The parts described as separate components may be or may not be physically separated. The components displayed as parts may be or may not be physical parts, that is, the components may be located in a place, or may be distributed on a plurality of network parts. Part or all of the modules may be selected according to actual requirements to achieve the purposes of the solutions of this embodiment. It can be understood and implemented by those of ordinary skill in the art without paying inventive efforts.

The above description is only an exemplary implementation of the present application and is not intended to limit the scope of protection of the present application. Any variations or replacements apparent to those skilled in the art within the technical scope disclosed by the present application shall fall within the scope of protection of the present application. Therefore, the protection scope of the present application shall be subject to the protection scope of the claims.

### INDUSTRIAL PRACTICALITY

Embodiments of the disclosure disclose a method for identity authentication, apparatus, a device, a chip, a storage medium and a program. In the embodiments of the disclosure, information including identity authentication result information of an AAC is encrypted with a message encryption key, so as to prevent exposure of carried private and sensitive information carried in a process of the AAC sending an authentication result message to an REQ. Therefore, an attacker has no knowledge of whether the AAC is valid. In this way, it is possible to prevent the attacker from mainly attacking the valid AAC, illegal activities by using the private and sensitive information of the AAC can be avoid, security of the AAC, the REQ and even the network can be ensured. Furthermore, an authentication server is involved to achieve a unilateral identity authentication for the AAC by the REQ in real-time while ensuring confidentiality of information related to an entity identity, which lays a foundation for ensuring that the user communicates with a valid network.

## Claims

1. A method for identity authentication, comprising:
sending, by an authentication access controller, AAC, a first authentication request message to a first authentication server trusted by the AAC, wherein the first authentication request message comprises a digital certificate of the AAC;
acquiring, by the AAC, a first authentication response message from the first authentication server, wherein the first authentication response message comprises identity authentication result information Pub_{AAC} and a digital signature of a second authentication server trusted by a requester, REQ, and the Pub_{AAC} comprises a verification result for the digital certificate of the AAC;
acquiring, by the REQ, an authentication result message from the AAC, wherein the authentication result message comprises an encrypted identity authentication result information, and the encrypted identity authentication result information is obtained by encrypting to-be-encrypted data comprising the Pub_{AAC} and the digital signature of the second authentication server trusted by the REQ with a message encryption key by the AAC;
decrypting, by the REQ, the encrypted identity authentication result information with the message encryption key, to obtain the Pub_{AAC} and the digital signature of the second authentication server;
verifying, by the REQ, the digital signature of the second authentication server with a public key of the second authentication server; and
in response to the verification being successful, determining, by the REQ, an identity authentication result of the AAC according to the verification result in the Pub_{AAC}.

2. The method of claim 1, further comprising:
before sending, by the AAC, the first authentication request message to the first authentication server trusted by the AAC,
sending, by the AAC, a key request message to the REQ, wherein the key request message comprises a key exchange parameter of the AAC;
performing, by the REQ, key exchange calculation according to information including a temporary private key corresponding to a key exchange parameter of the REQ and a temporary public key in the key exchange parameter of the AAC, to generate a first key, and calculating, according to information including the first key, the message encryption key through a key derivation algorithm;
sending, by the REQ, a key response message to the AAC, wherein the key response message comprises the key exchange parameter of the REQ; and
performing, by the AAC, key exchange calculation according to information including a temporary private key corresponding to the key exchange parameter of the AAC and a temporary public key in the key exchange parameter of the REQ, to generate the first key, and calculating, according to information including the first key, the message encryption key through the key derivation algorithm.

3. The method of claim 2, wherein the key request message further comprises a first random number generated by the AAC, and calculating, by the REQ, the message encryption key further comprises:
calculating, by the REQ, the message encryption key according to information including the first key, the first random number, and a second random number generated by the REQ;
wherein the key response message further comprises the second random number, and calculating, by the AAC, the message encryption key further comprises:
calculating, by the AAC the message encryption key according to the information including the first key, the first random number, and the second random number.

4. The method of claim 3, wherein in response to the key response message further comprising the second random number, the first authentication request message further comprises the second random number, the first authentication response message further comprises the second random number, and the to-be-encrypted data of the encrypted identity authentication result information in the authentication result message further comprises the second random number; and
before determining, by the REQ, the identity authentication result of the AAC, the method further comprises:
decrypting, by the REQ, the encrypted identity authentication result information with the message encryption key to obtain the second random number;
verifying whether the obtained second random number is consistent with the second random number generated by the REQ; and
in response to the obtained second random number being consistent with the second random number generated by the REQ, determining, by the REQ, the identity authentication result of the AAC according to the verification result in the Pub_{AAC}.

5. The method of claim 3 or 4, wherein the key response message further comprises the first random number, and before calculating, by the AAC, the message encryption key, the method further comprises:
verifying, by the AAC, whether the first random number in the key response message is consistent with the first random number generated by the AAC; and
in response the first random number in the key response message being consistent with the first random number generated by the AAC, calculating, by the AAC, the message encryption key.

6. The method of any one of claims 2 to 5, further comprising:
after calculating, by the REQ, the message encryption key,
encrypting, by the REQ, information including an identity identification of the REQ with the calculated message encryption key, to obtain an encrypted identity identification,
wherein the key response message further comprises the encrypted identity identification, and after calculating, by the AAC, the message encryption key, the method further comprises:
decrypting, by the AAC, the encrypted identity identification with the calculated message encryption key to obtain the identity identification of the REQ.

7. The method of claim 6, wherein in response to the AAC obtaining the identity identification of the REQ, the first authentication request message further comprises the identity identification of the REQ, the first authentication response message further comprises the identity identification of the REQ, and the to-be-encrypted data of the encrypted identity authentication result information in the authentication result message further comprises the identity identification of the REQ; and
wherein before determining, by the REQ, the identity authentication result of the AAC, the method further comprises:
decrypting, by the REQ, the encrypted identity authentication result information with the message encryption key to obtain the identity identification of the REQ;
verifying whether the obtained identity identification of the REQ is consistent with the identity identification owned by the REQ; and
in response to the obtained identity identification of the REQ being consistent with the identity identification owned by the REQ, determining, by the ERQ, the identity authentication result of the AAC according to the verification result in the Pub_{AAC}.

8. The method of any one of claims 2 to 7, wherein the key request message further comprises security capability parameter information supported by the AAC, and the method further comprises:
determining, by the REQ, a specific security policy used by the REQ according to the security capability parameter information; and
containing the specific security policy in the key response message.

9. The method of any one of claims 2 to 8, wherein the key request message further comprises an identity identification of at least one authentication server trusted by the AAC, and the method further comprises:
determining, by the REQ, an identity identification of at least one authentication server trusted by the REQ according to the identity identification of the at least one authentication server trusted by the AAC; and
wherein the key response message further comprises the identity identification of the at least one authentication server trusted by the REQ, and the method further comprises:
determining, by the AAC, the first authentication server participating in the identity authentication according to the identity identification of the at least one authentication server trusted by the REQ in the key response message and the identity identification of the at least one authentication server trusted by the AAC in the key request message.

10. The method of any one of claims 2 to 9, wherein the key response message further comprises an identity identification of at least one authentication server trusted by the REQ, and the method further comprises:
determining, by the AAC, the first authentication server participating in the identity authentication according to the identity identification of the at least one authentication server trusted by the REQ and an identity identification of an authentication server trusted by the AAC.

11. The method of any one of claims 1 to 10, further comprising:
before determining, by the REQ, the identity authentication result of the AAC,
determining, by the REQ, whether verification of a digital signature of the AAC is successful, and in response to the verification of the digital signature of the AAC being successful, determining, by the REQ, the identity authentication result of the AAC according to the verification result in the Pub_{AAC}.

12. The method of claim 11, wherein determining, by the REQ, whether the verification of the digital signature of the AAC is successful comprises:
in response to the first authentication request message further comprising the digital signature of the AAC, verifying, by the first authentication server, the digital signature of the AAC with the digital certificate of the AAC; and in response to receiving the authentication result message, determining, by the REQ, that the verification of the digital signature of the AAC is successful; or
in response to the authentication result message further comprising the digital signature of the AAC and the Pub_{AAC} further comprising the digital certificate of the AAC, verifying, by the REQ, the digital signature of the AAC with the digital certificate of the AAC in the Pub_{AAC}; and determining whether the verification of the digital signature of the AAC is successful according to a verification result.

13. The method of any one of claims 2 to 10, wherein the authentication result message further comprises a message integrity check code, the message integrity check code is calculated on other fields in the authentication result message other than the message integrity check code by the AAC with a message integrity check key, wherein the message integrity check key of the AAC is generated in a same way as the message encryption key of the AAC; and
before determining, by the REQ, the identity authentication result of the AAC, verifying, by the REQ, the message integrity check code with a message integrity check key, and in response to the verification being successful, determining, by the REQ, the identity authentication result of the AAC, wherein the message integrity check key of the REQ is generated in a same way as the message encryption key of the REQ.

14. The method of any one of claims 1 to 13, further comprising:
in response to the second authentication server being the same as the first authentication server:
after receiving the first authentication request message, verifying, by the first authentication server, whether the digital certificate of the AAC is valid, to obtain the verification result for the digital certificate of the AAC;
generating the Pub_{AAC} according to information including the verification result;
calculating a digital signature of the first authentication server on to-be-signed data including the Pub_{AAC}; and
generating the first authentication response message according to information including the Pub_{AAC} and the digital signature of the first authentication server, wherein
the digital signature of the second authentication server trusted by the REQ in the first authentication response message is the digital signature of the first authentication server.

15. The method of any one of claims 1 to 13, further comprising:
in response to the second authentication server and the first authentication server being two different authentication servers:
after receiving the first authentication request message, verifying, by the first authentication server, whether the digital certificate of the AAC is valid, to obtain the verification result for the digital certificate of the AAC;
generating the Pub_{AAC} according to information including the verification result;
calculating a digital signature of the first authentication server on to-be-signed data including the Pub_{AAC};
sending, by the first authentication server, a second authentication request message to the second authentication server, wherein the second authentication request message comprises the Pub_{AAC} and the digital signature of the first authentication server;
verifying, by the second authentication server, the digital signature of the first authentication server with a public key of the first authentication server, and in response to the verification being successful, calculating, by the second authentication server, the digital signature of the second authentication server on the to-be-signed data including the Pub_{AAC};
sending, by the second authentication server, a second authentication response message to the first authentication server, wherein the second authentication response message comprises the Pub_{AAC} and the digital signature of the second authentication server; and
after receiving the second authentication response message, sending, by the first authentication server, the first authentication response message comprising the Pub_{AAC} and the digital signature of the second authentication server to the AAC.

16. The method of any one of claims 1 to 15, wherein the REQ calculates a hash value according to a latest preceding message received from the AAC and sends a message containing the hash value to the AAC, and when receiving the message from the REQ, verifying, by the AAC, the hash value in the received message, and performing subsequent operations in response to the verification being successful;
the AAC calculates a hash value according to a latest preceding message received from the REQ and sends a message containing the hash value to the REQ, and when receiving the message from the AAC, verifying, by the REQ, the hash value in the received message, and performing subsequent operations in response to the verification being successful;
the AAC calculates a hash value according to a latest preceding message received from the first authentication server and sends a message containing the hash value to the first authentication server, and when receiving the message from the AAC, verifying, by the first authentication server, the hash value in the received message, and performing subsequent operations in response to the verification being successful;
the first authentication server calculates a hash value according to a latest preceding message received from the AAC and sends a message containing the hash value to the AAC, and when receiving the message from the first authentication server, verifying, by the AAC, the hash value in the received message, and performing subsequent operations in response to the verification being successful;
the first authentication server calculates a hash value according to a latest preceding message received from the second authentication server and sends a message containing the hash value to the second authentication server, and when receiving the message from the first authentication server, verifying, by the second authentication server, the hash value in the received message, and performing subsequent operations in response to the verification being successful;
the second authentication server calculates a hash value according to a latest preceding message received from the first authentication server and sends a message containing the hash value to the first authentication server, and when receiving the message from the second authentication server, verifying, by the first authentication server, the hash value in the received message, and performing subsequent operations in response to the verification being successful.

17. A requester, REQ, comprising:
a first acquiring portion, configured to acquire an authentication result message from an authentication access controller, AAC, wherein the authentication result message comprises an encrypted identity authentication result information, and the encrypted identity authentication result information is obtained by encrypting to-be-encrypted data comprising an identity authentication result information Pub_{AAC} and a digital signature of a second authentication server trusted by the REQ with a message encryption key by the AAC,
wherein the Pub_{AAC} and the digital signature of the second authentication server is acquired by the AAC from a first authentication response message sent by a first authentication server trusted by the AAC, and the Pub_{AAC} comprises a verification result for a digital certificate of the AAC;
a decrypting portion, configured to decrypt the encrypted identity authentication result information with the message encryption key, to obtain the Pub_{AAC} and the digital signature of the second authentication server;
a first verifying portion, configured to verify the digital signature of the second authentication server with a public key of the second authentication server; and
a first determining portion, configured to, in response to the verification being successful, determine an identity authentication result of the AAC according to the verification result in the Pub_{AAC}.

18. The REQ of claim 17, further comprising:
a second acquiring portion, configured to acquire a key request message from the AAC, wherein the key request message comprises a key exchange parameter of the AAC;
a calculating portion, configured to perform key exchange calculation according to information including a temporary private key corresponding to a key exchange parameter of the REQ and a temporary public key in the key exchange parameter of the AAC, to generate a first key; and calculate, according to information including the first key, the message encryption key through a key derivation algorithm; and
a sending portion, configured to send a key response message to the AAC, wherein the key response message comprises the key exchange parameter of the REQ.

19. The REQ of claim 18, wherein the key request message acquired by the second acquiring portion further comprises a first random number generated by the AAC; and the key response message sent by the sending portion further comprises a second random number generated by the REQ; and
the calculating portion is further configured to: calculate the message encryption key according to information including the first key, the first random number, and the second random number generated by the REQ.

20. The REQ of claim 19, wherein in response to the key response message sent by the sending portion further comprising the second random number, the first authentication response message further comprises the second random number, and the to-be-encrypted data of the encrypted identity authentication result information acquired by the first acquiring portion further comprises the second random number; and
the decrypting portion is further configured to decrypt the encrypted identity authentication result information with the message encryption key to obtain the second random number, and the first verifying portion is further configured to verify whether the second random number obtained by the decrypting portion is consistent with the second random number generated by the REQ.

21. The REQ of any one of claims 18 to 20, further comprising:
an encrypting portion, configured to encrypt information including an identity identification of the REQ with the message encryption key calculated by the calculating portion, to obtain an encrypted identity identification,
wherein the key response message sent by the sending portion further comprises the encrypted identity identification.

22. The REQ of claim 21, wherein in response to the key response message sent by the sending portion comprising the encrypted identity identification, the first authentication response message further comprises the identity identification of the REQ, the to-be-encrypted data of the encrypted identity authentication result information acquired by the first acquiring portion further comprises the identity identification of the REQ; and
the decrypting portion is further configured to decrypt the encrypted identity authentication result information to obtain the identity identification of the REQ, and the first verifying portion is further configured to verify whether the identity identification of the REQ obtained by the decrypting portion is consistent with the identity identification owned by the REQ.

23. The REQ of any one of claims 18 to 22, wherein the key request message acquired by the second acquiring portion further comprises security capability parameter information supported by the AAC, and the REQ further comprises:
a second determining portion, configured to determine a specific security policy used by the REQ according to the security capability parameter information, wherein the key response message sent by the sending portion further comprises the specific security policy.

24. The REQ of any one of claims 18 to 23, wherein the key request message acquired by the second acquiring portion further comprises an identity identification of at least one authentication server trusted by the AAC, and the REQ further comprises:
a third determining portion, configured to determine an identity identification of at least one authentication server trusted by the REQ according to the identity identification of the at least one authentication server trusted by the AAC;
wherein the key response message sent by the sending portion further comprises the identity identification of the at least one authentication server trusted by the REQ.

25. The REQ of any one of claims 18 to 24, wherein the key response message sent by the sending portion further comprises an identity identification of at least one authentication server trusted by the REQ.

26. The REQ of any one of claims 17 to 25, wherein the first determining portion is further configured to, before determining the identity authentication result of the AAC, determine whether verification of a digital signature of the AAC is successful, and in response to the verification of the digital signature of the AAC being successful, determine the identity authentication result of the AAC according to the verification result in the Pub_{AAC}.

27. The REQ of claim 26, wherein the first determining portion is configured to, in response to the first acquiring portion acquiring the authentication result message, determine that the verification of the digital signature of the AAC is successful, wherein when a first authentication request message sent by the AAC to the first authentication server trusted by the AAC further comprises the digital certificate of the AAC and the digital signature of the AAC, the digital signature of the AAC is verified by the first authentication server with the digital certificate of the AAC; or
the first determining portion is further configured to, in response to the authentication result message further comprising the digital signature of the AAC and the Pub_{AAC} further comprising the digital certificate of the AAC, verify the digital signature of the AAC with the digital certificate of the AAC; and determine whether the verification of the digital signature of the AAC is successful according to a verification result.

28. The REQ of any one of claims 18 to 25, wherein the authentication result message acquired by the first acquiring portion further comprises a message integrity check code calculated by the AAC, and the REQ further comprises:
a second verifying portion, configured to verify the message integrity check code in the authentication result message with a message integrity check key, wherein the message integrity check key is generated in a same way as the message encryption key.

29. The REQ of any one of claims 18 to 25 and 28, wherein the REQ calculates a hash value according to a latest preceding message received from the AAC and a message sent by the REQ to the AAC comprises the hash value.

30. An authentication access controller, AAC, comprising:
a first sending portion, configured to send a first authentication request message to a first authentication server trusted by the AAC, wherein the first authentication request message comprises a digital certificate of the AAC; and
a first acquiring portion, configured to acquire a first authentication response message from the first authentication server, wherein the first authentication response message comprises identity authentication result information Pub_{AAC} and a digital signature of a second authentication server trusted by a requester, REQ, and the Pub_{AAC} comprises a verification result for the digital certificate of the AAC,
wherein the first sending portion is further configured to send an authentication result message to the REQ, wherein the authentication result message comprises an encrypted identity authentication result information, and the encrypted identity authentication result information is obtained by encrypting to-be-encrypted data comprising the Pub_{AAC} and the digital signature of the second authentication server with a message encryption key by the AAC.

31. The AAC of claim 30, further comprising:
a second sending portion, configured to send a key request message to the REQ, wherein the key request message comprises a key exchange parameter of the AAC;
a second acquiring portion, configured to acquire a key response message from the REQ, wherein the key response message comprises a key exchange parameter of the REQ; and
a calculating portion, configured to perform key exchange calculation according to information including a temporary private key corresponding to the key exchange parameter of the AAC and a temporary public key in the key exchange parameter of the REQ, to generate a first key; and calculate, according to information including the first key, the message encryption key through a key derivation algorithm.

32. The AAC of claim 31, wherein the key request message sent by the second sending portion further comprises a first random number generated by the AAC, and the key response message acquired by the second acquiring portion further comprises a second random number generated by the REQ, and
the calculating portion is further configured to calculate the message encryption key according to information including the first key, the first random number, and the second random number.

33. The AAC of claim 32, wherein the key response message acquired by the second acquiring portion further comprises the first random number, and the AAC further comprises:
a verifying portion, configured to verify whether the first random number in the key response message is consistent with the first random number generated by the AAC.

34. The AAC of claim 32 or 33, wherein the key response message acquired by the second acquiring portion further comprises the second random number generated by the REQ, the first authentication request message sent by the first sending portion further comprises the second random number; and
the first authentication response message acquired by the first acquiring portion further comprises the second random number, and the to-be-encrypted data of the encrypted identity authentication result information sent by the first sending portion further comprises the second random number.

35. The AAC of any one of claims 31 to 34, wherein the key response message acquired by the second acquiring portion further comprises an encrypted identity identification generated by the REQ, and the AAC further comprises:
a decrypting portion, configured to decrypt the encrypted identity identification with the message encryption key calculated by the calculating portion to obtain an identity identification of the REQ.

36. The AAC of claim 35, wherein in response to the decrypting portion obtaining the identity identification of the REQ, the first authentication request message sent by the first sending portion further comprises the identity identification of the REQ, and
the first authentication response message acquired by the first acquiring portion further comprises the identity identification of the REQ, and the to-be-encrypted data of the encrypted identity authentication result information identity sent by the first sending portion further comprises the identity identification of the REQ.

37. The AAC of any one of claims 31 to 36, wherein the key request message sent by the second sending portion further comprises security capability parameter information supported by the AAC, and the key response message acquired by the second acquiring portion further comprises a specific security policy used by the REQ, wherein the specific security policy is determined by the REQ according to the security capability parameter information.

38. The AAC of any one of claims 31 to 37, wherein the key request message sent by the second sending portion further comprises an identity identification of at least one authentication server trusted by the AAC, and the key response message acquired by the second acquiring portion further comprises an identity identification of at least one authentication server trusted by the REQ, and the AAC further comprises:
a first determining portion, configured to determine the first authentication server participating in the identity authentication according to the identity identification of the at least one authentication server trusted by the REQ in the key response message and the identity identification of the at least one authentication server trusted by the AAC in the key request message.

39. The AAC of any one of claims 31 to 38, wherein the key response message acquired by the second acquiring portion further comprises an identity identification of at least one authentication server trusted by the REQ, and the AAC further comprises:
a second determining portion, configured to determine the first authentication server participating in the identity authentication according to the identity identification of the at least one authentication server trusted by the REQ and an identity identification of an authentication server trusted by the AAC.

40. The AAC of any one of claims 31 to 39, wherein the authentication result message sent by the first sending portion further comprises a message integrity check code, the message integrity check code is calculated on other fields in the authentication result message other than the message integrity check code by the AAC with a message integrity check key, and wherein the message integrity check key is generated in a same way as the message encryption key.

41. The AAC of any one of claims 30 to 40, wherein the AAC calculates a hash value according to a latest preceding message received from the REQ and sends a message containing the hash value to the REQ; and the AAC calculates a hash value according to a latest preceding message received from the first authentication server and sends a message containing the hash value to the first authentication server.

42. A requester, REQ, comprising: a processor and a memory configured to store computer programs, wherein the processor is configured to call and run the computer programs stored in the memory, to perform the operations performed by the REQ in the method for identity authentication of any one of claims 1 to 16.

43. An authenticated access controller, AAC, comprising: a processor and a memory configured to store computer programs, wherein the processor is configured to call and run the computer programs stored in the memory, to perform the operations performed by the AAC in the method for identity authentication of any one of claims 1 to 16.

44. A chip, comprising a processor, wherein the processor is configured to call and run computer programs from a memory, to cause a requester, REQ, mounted with the chip to perform the operations performed by the REQ in the method for identity authentication of any one of claims 1 to 16, or to cause an authentication access controller, AAC, mounted with the chip to perform operations performed by the AAC in the method for identity authentication of any one of claims 1 to 16.

45. A computer storage medium, configured to store computer programs, wherein the computer programs cause a requester, REQ, to perform the operations performed by the REQ in the method for identity authentication of any one of claims 1 to 16, or cause an authentication access controller, AAC, to perform the operations performed by the AAC in the method for identity authentication of any one of claims 1 to 16.

46. A computer program, causing a requester, REQ, to perform the operations performed by the REQ in the method for identity authentication of any one of claims 1 to 16, or causing an authentication access controller, AAC, to perform the operations performed by the AAC in the method for identity authentication of any one of claims 1 to 16.
